# EUROPEAN PATENT SPECIFICATION

(11) **EP 1 428 799 B1**
(45) Date of publication and mention of the grant of the patent: **05.01.2011**
(21) Application number: 03028162.0
(22) Date of filing: 08.12.2003
(51) Int. Cl.: C02F 1/68, E04H 4/12

(54) **Dispenser for water conditioning material**
Spender für Wasserbehandlungsstoffe
Doseur pour matériaux de conditionnement d'eau

(30) Priority: 10.12.2002 US 432189 P; 27.02.2003 US 450095 P; 07.08.2003 US 635999; 07.08.2003 US 636820; 07.08.2003 US 636821
(43) Date of publication of application: 16.06.2004
(73) Proprietor: King Technology, Inc., Hopkins, Minnesota 55343 (US)
(72) Inventor: King, Joseph A., Wayzata MN 55391 (US); Johnson, Jeffery, Minneapolis Minnesota 55417 (US); Pontius, Micheal, Mora Minnesota 55051 (US); Frank, Marlin, Minneapolis MN 55406 (US)
(74) Representative: Modiano, Micaela Nadia

(56) References cited:
- EP-B- 1 042 234
- US-A- 4 630 634
- US-A- 4 702 270
- US-A- 5 055 183
- US-A- 5 407 567
- US-A- 6 123 842
- US-B2- 6 340 431

## Description

### FIELD OF THE INVENTION

This invention relates generally to dispensing and more particularly to a floating dispensing system, a holder for said floating dispensing system and a method of treating water in a spa, pool or hot tub with said floating dispensing system.

The present invention provides a floating dispensing system including a separable holder that when secured to at least two cartridges dispensers floats with a portion above the fluid line and a further portion including the dispenser cartridges below the fluid line to permit the simultaneous dispensing of two or more materials into the body of fluid. The present invention allows one to quickly change one or both of the cartridge dispensers and maintain each of the cartridge dispensers in one location in the body of fluid.

The present invention provides a dispensing system wherein dispenser cartridges can be quickly and interchangeably placed into a fluid system with the system configured such that a person changing the dispenser cartridges is not accidentally exposed to a jet of high pressure liquid.

Another feature of the present invention is that if the dispenser cartridges are used they can be placed in a dispenser holder that allows one to remove all of the dispenser cartridges as a unit but allows one to replace only those dispenser cartridges that are spent.

One of desirable aspects of a dispensing system is that one should be able to control the amount of dispersant that is introduced into the fluid under different conditions. For example, in a hot tub one may want to release the dispersant at a first rate to maintain the proper concentration of dispersant in the hot tub if no one is using the hot tub. On the other hand, if many persons are using the hot tub one will want to increase the dispersant rate in order to maintain the proper concentration of dispersant in the hot tub. Similar conditions occur in other commercial applications where the concentration of the dispersant in the fluid dissipates due to internal or external factors. In these conditions one may want to have a higher dispersal rate to compensate for higher consumption of dispersants. Still in other situations one may have different dispersant materials that need to be dispersed at different rates yet both the dispersal rates may need to be simultaneously increased or decreased depending on the operating conditions Consequently, the dispersal system should enable a user to predictable deliver different dispersal rates for different conditions and to change the deliver rate for one or more dispensers that are contained within the system.

One embodiment of the present invention includes a fluid dispersant system utilizing dispersant cartridges what enables one to predictably control the dispersant rate into a fluid by controlling the flow pattern past a dispensing cartridge.

An universal cartridge dispenser is described that allows one to maintain predictable dispersant dispersal rates in either a stagnant fluid environment or a moving fluid environment when a moving fluid is directed around the universal cartridge dispenser. In the moving fluid environment one can position the universal cartridge proximate a moving fluid stream and obtain predicable results based on the dispersant transport areas between the interior of the dispenser and the exterior of the dispenser. Similarly, in a stagnant fluid environment one can position the universal cartridge in a body of fluid and obtain consistent results based on the dispersant transport area in the universal cartridge dispenser. That is, it has been found that under either a stagnant fluid environment or a moving fluid environment one can effectively control the dispersant rate of the dispersant and hence the concentration of dispersant in the surrounding fluid. By allowing one to obtain a predictable and repeatable dispersal dispersant rate it allows one to use the universal cartridge dispenser in either a stagnant fluid environment or a moving fluid environment.

A universal cartridge is described that one can predictably determine the dispersal rate whether the cartridge is in a stagnant fluid or is proximate to a moving fluid.

US-A-5 055 183 discloses a water treatment device and a cartridge for a water treatment device for maintaining the quality of the water in a swimming pool using a water soluble chemical, typically a chemical which releases chlorine or a chlorine-containing compound into the pool water. The device includes a buoyant body comprising a first large diameter cylindrical sleeve and a second smaller diameter cylindrical sleeve, located co-axially with respect to the first sleeve. The free end of the sleeve is closed off by means of an end piece or cap. The device also includes a cartridge being removably mounted within the sleeve to permit its removal from the sleeve when all of the tablets have been consumed.

US-A-6 340 431 discloses a monitoring device that is intended to be removed from the spa when the spa is being used by one or more persons. The disclosed device dispenses three liquids from bottles having solenoid valves, said liquids being a shock solution, a base solution for raising pH and an acid solution for lowering pH of a system and only includes one dispensing cartridge, which which is centrally located for dispensing bromine.

### SUMMARY OF THE INVENTION

The present invention relates to a floating dispensing system, a holder of said system and to a method of treating water in a spa, pool or tub as claimed in claims. A floating dispenser system for dispensing materials into a fluid with the floating dispenser system including a holder with receptacles for removably attaching or detaching at least two cartridge dispensers therein to allow one to dispense materials into a fluid system by placing the floating dispensing system in a body of fluids and to replenish the system by merely removing and replaying a cartridge in the holder. If desired a color coded system permits quick visually identification of the contents of the dispenser cartridges.

A dispenser system that takes high pressure fluid such as a high pressure water source and reduces the volume flow of the high pressure water as it flows into a dispenser with the dispenser having a low pressure outlet, which offers negligible fluid resistance in comparison to the inlet fluid resistance to the dispenser, thereby ensuring that if a dispenser cap is accidentally removed from the dispenser while the unit is in operation the water will not spray out into and onto the user. The dispensing system includes a cartridge carrier and a dispenser that can maintain a uniform flow pattern under different flow rates to provide for a predictable control of a dispersion rate of a dispersant located in the system.

A removable cartridge holder allows one to insert and hold multiple cartridges with treatment materials therein and to remove the cartridge dispensers therein en bloc and in another embodiment the dispenser system can be used without a cartridge dispenser with the treatment materials placed directly into a chamber in dispenser system.

A dispenser cartridge includes openings that have fluid access areas whose size can be increased or decreased to enable one to predictably change the rate of dispersant released into the fluid by increasing or decreasing the size of the fluid access areas.

A universal cartridge that is useable in either a stagnant fluid environment or in a moving fluid environment with the universal cartridge floatable in a stagnant fluid environment and securable in a moving fluid environment with the universal cartridge having an inner housing having a diffusion port and an outer sleeve having a diffusion port with the housing and the sleeve mateable engaged with each other through frictional engagement to inhibit flow therebetween while permitting rotational displacement of the housing with respect to the sleeve to allow one to increase or decrease a dispersant transport area between a zone within the housing to a zone exterior to the housing through aligning a recessed diffusion port of the housing with a diffusion port of the sleeve with the diffusion ports inhibiting fluid flow therethrough.

### BRIEF DESCRIPTION OF THE DRAWINGS

Figure 1 is a cutaway view of a dispenser system, wich is no part of the present invention, having a container and dispenser for dispensing materials into the fluid in the container:
Figure 2 is a perspective view of a cartridge for use in the dispenser system of Figure 1 :
Figure 3 is a front view of a cartridge carrier for holding one or more cartridges in the dispenser chamber in the dispensing system of Figure 1: and
Figure 4 is a side view of a cartridge carrier of Figure 3:
Figure 5 is a cross sectional view of the cartridges carrier of Figure 3 illustrating the flexible ears that permit lateral insertion of a cartridge therein:
Figure 6, wich is no part of the present invention, shows an isolated view of a housing for peripherally introducing a fluid into the housing chamber:
Figure 7 is a pictorial view of a dispenser housing head for securing to the dispenser housing of Figure 6:
Figure 8, wich is no part of the present invention, is a pictorial view of a dispenser housing locking nut for securing the dispenser housing head to a panel on the system:
Figure 9 is a dispenser housing cap for securement to the dispenser housing head shown in Figure 7:
Figure 10 is a dispenser housing locking cam for securing in the dispenser housing of Figure 6:
Figure 11, wich is no part of the present invention, shows an exploded view of a dispenser system positioned proximate a panel:
Figure 12, wich is no part of the present invention, is a pictorial view of the handle and locking mechanism on a cartridge carrier:
Figure 13, wich is no part of the present invention, is a cross section view of a cartridges dispenser suspended in a cylindrical chamber; and
Figure 14 is a graph of dispersant concentration as a function of time with the cartridge dispenser suspended in the cylindrical fluid chamber of Figure 13.
Figure 15, wich is no part of the present invention, is a partial sectional view of the universal cartridge:
Figure 15a is a partial view of the housing and sleeve of the universal cartridge of Figure 15:
Figure 16 is a cross section view taken along lines 16-16 of Figure 15 with the universal cartridge positioned in a stagnant fluid environment:
Figure 17 , wich is no part of the present invention, is a cross section view of the cartridge located in a cartridge holder positioned within a fluid containment chamber in a moving fluid environment:
Figure 18 , wich is no part of the present invention,is an enlarged view of a portion of the housing showing the diffusion port with a grid therein:
Figure 19 , wich is no part of the present invention,is a cross section view taken along lines 19-19 of Figure 18 to showing the recessed grid in the housing:
Figure 20 , wich is no part of the present invention,shows a portion of the housing proximate a portion of the sleeve to show the transport area from the dispensing zone in the chamber in the housing to the receiving zone external to the chamber:
Figure 21, wich is no part of the present invention, is a front elevation view of the cartridge container of the cartridge dispenser: and
Figure 22, wich is no part of the present invention, is a partial cutaway view of a container containing a liquid in a stagnant environment.
Figure 23 is a perspective of the floating dispenser system with two cartridge dispensers removable secured therein:
Figure 24 is an isolated view of the cartridges dispensers for use in the present invention:
Figure 25 is an exploded view illustrating the assembly of the cartridge dispensers and the cartridge holder:
Figure 26 is a top view of the cartridge holder for holding two cartridge dispensers in a side by side condition:
Figure 27 is a bottom view of the cartridge holder of Figure 4:
Figure 28 is a cross sectional view of the cartridge holder of Figure 26 taken along lines 28-28:
Figure 29 is a front elevation view of the cartridge container of the cartridge dispenser:
Figure 30 is a front elevation view of the dispersant rate selector of the cartridge dispenser:
Figure 31 is an exploded view of a float cover and a float base for a cartridge dispenser:
Figure 32 is a sectional view of the float cover for the cartridge dispenser:
Figure 32A is a detail view of a set of inter-engaging rings that hold the float cover and the float base in a leak-proof condition:
Figure 33 is a front elevation view, partially in section, showing an assembled cartridge dispenser:
Figure 34 is a partial cross sectional view of a container with the floating dispenser system located in a first orientation therein: and
Figure 35 is a partial cross sectional view of a container of Figure 34 with the floating dispenser system of Figure 34 located in a second orientation.

### DESCRIPTION OF THE PREFERRED EMBODIMENT

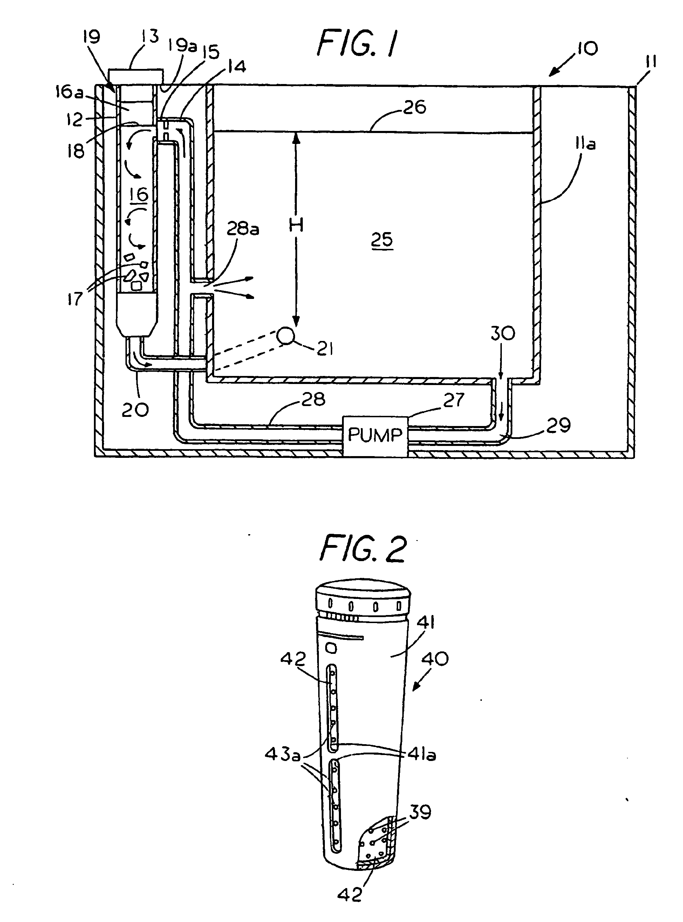

Figure 1 is a cutaway view showing a dispenser system 10 with an outer housing 11 having an inner container 11a partially filled with a fluid such as water 25. Typically, system 10 can be used in a pool, spa or other fluid container where fluid treatment is required. For example, the system can be used for the water that is used either for work, pleasure or for drinking.

In the embodiment shown the container 11a is configured in a spa mode with an inlet 30 positioned to draw water into an inlet pipe 29 through a pump 27. Pump 27 increases the pressure of the water and forces the water in fluid conduit 28 on the outlet side of the pump to discharge under high pressure as a high pressure jet at underwater port 28a. The high pressure fluid jet can provide multiple functions, for example, in a hot tub, the high pressure fluid jet produced by the pump system circulates the water in the hot tub thus ensuring that the water purification materials are dispersed throughout the tub. In addiction, the high pressure jet produced by the pump system can also provide a water massages as a user sits in the tub. A further use of a portion of the stream of fluid can occur when fluid is diverted to a dispensing housing to allow the fluid to flows past a dispersant material that is contained in the dispenser housing.

The high pressure line 28 is in fluid communication with a dispenser 19 which is mounted in the housing 11. Dispenser 19 comprises a housing that contains a dispenser inlet 14 with a fluid restriction 15 in the form of a small aperture with a cross sectional flow diameter on the order of .010 of an inch while the cross sectional flow diameter of the line 28 and nozzle outlet 28a may be two inches or more. It will be appreciated that the cross sectional area or size of the aperture 15 and the cross sectional area or size line 28 can be scaled up or down to accommodate various flow conditions but that the ratio of the difference in cross sectional area produces a low pressure region in the dispenser. Thus, in the present invention, a purpose of the restriction 15 is to limit the volume flow of high pressure water into chamber 16 in the dispenser 19 but still provide for flow of water at a lower pressure through chamber 16.

In the embodiments shown in Figure 1 the dispenser 19 contains an open dispersant chamber 16 for placing or retaining dispersant materials therein. That is, cap 13 can be removed and typical materials such as bromine sticks 17 can be dropped in chamber 16. Located in the bottom portion of chamber 16 in dispenser 19 are the water purification materials 17 or other fluid treatment materials, In one embodiment dissolvable materials 17 such as halogen and particularly halogens such as bromine or chlorine tablets are placed directly into chamber 16 by removal of cap 13 which threadingly engages a male thread on dispenser 19. In operation of the system of Figure 1. the top inlet 14 of dispenser 19 receives water under high pressure but low volume flow since only a small amount of water can flow through the restriction 15. With the cap 13 on dispenser 9 the pressure in the chamber 16 rises sufficient to force water to flow, albeit at a slow velocity, through the dispenser chamber 16 and into the container 11a through outlet 21. As shown in Figure 1 dispenser 19 includes an air pocket 16a above the water line 18 of the water in the dispenser 19. It should be understood that the top end 19a of dispenser is located above the water line 26 in the container 11a and that the bottom discharge port offers little resistance to fluid returning to container 11a. Consequently, if the cap 13 is not on the dispenser 13 the water will not flow out of dispenser 19 but will seek its own level, namely the level indicated by water line 26 in container 11a since there is little resistance to flow of water out of the port 21 in dispenser 19.

The liquid level in the dispenser 19, which is indicated by reference numeral 18 and the air pocket 16a combine to provide a reservoir or chamber for fluid. That is, the water flows in the directions indicated by arrows in Figure 1. The water flows through chamber 16 and out passage 20 and is discharged into container 11a through port 21 which is located below the water line 26. The egress passage 20 is characterized by having a substantially larger diameter than the diameter of the restrictor 15 so as not to impede the flow of water therethrough. As a result, the high pressure low volume flow of water entering the dispenser 16 is forced through the dispenser 19 and into the bottom of the container 11a where the discharge pressure is primarily determined by the depth of the water "h" below the water line. The presence of the air pocket 16a ensures that if the cap is removed it will be air that escapes from the dispenser rather than the fluid in the chamber. The maintenance of an air pocket in the dispenser housing insures that the fluid level in the system will be below the top of the dispenser housing so that removal of cap 13 will not cause fluid to spill from the housing.

Thus in the present system the water discharges into a low pressure region in the bottom of container 11a. If someone should accidentally remove cap 13 the pressure of water entering into the dispenser arrives at a low volume flow with the stream of water directed away from the top opening 19a to prevent any water or dispenser materials from being blown back at the person as the cap 13 is removed. In addition, the air pocket 16a can provide a reservoir chamber to absorb water flowing into the dispenser 19. That is, even with the outlet 21 blocked there is a time lag of several minutes before the water would flow out the top of dispenser 19 thus diving a person time to shut off the recirculation system.

In normal operation, the pressure in air pocket 16a may rise sightly due to the fluid circulation resistance through the dispenser 19 and cause the air pocket 16a to compress slightly, however, once the cap 13 is removed the water level 18 in the dispenser 19 may rise slightly but under normally conditions the flow will continue to circulate through the dispenser since the fluid resistance to water discharging out the top 19a of the dispenser 19 is maintained at greater fluid resistance than the fluid resistance to water flowing though the dispenser 19 and back into the container 11a. In other words, the inlet 15 and the outlet 20 are sized such that if the water under pressure continues to come into the dispenser chamber 16 when the cap 13 is removed the water in the dispenser 19 will not rise over the top of the dispenser housing and spill out of the dispenser 19. That is, even though a slight increase in the water level 18 can occur water continues to flow through dispenser 19 and back into the container 11a thereby ensuring that unnecessary spills are avoided.

A removable cartridge or removable cartridges are placed in a cartridge holder that is removably positioned in a dispenser housing. Figure 2 shows a front view of a cartridge dispenser 40 for receiving a typical fluid treatment material such as water purification material. Cartridge 40 comprises an outer sleeve 41 that is rotatable positioned with respect to an inner container 42 which contains a dispersant 39. A pair of elongated openings 41 a allow fluid to flow enter container 42 through the openings 43a. Located in the bottom of container 42 is a dispersant material 39 such as minerals or the like which are used to treat water. Minerals 39 are different from chlorine or bromine tablets and the like which dissolve as they are used as minerals which do not dissolve need to be removed once the minerals have been spent. Thus the cartridge 40 comprises a dispersant holder that can be removed from a dispenser housing and replaced with a fresh cartridge. If desired cartridge 40 can be provided with a flotation chamber 45 that is attached directly to the cartridge 40 so the cartridge will float to the top of the dispenser chamber 16 for easy access and thus removal.

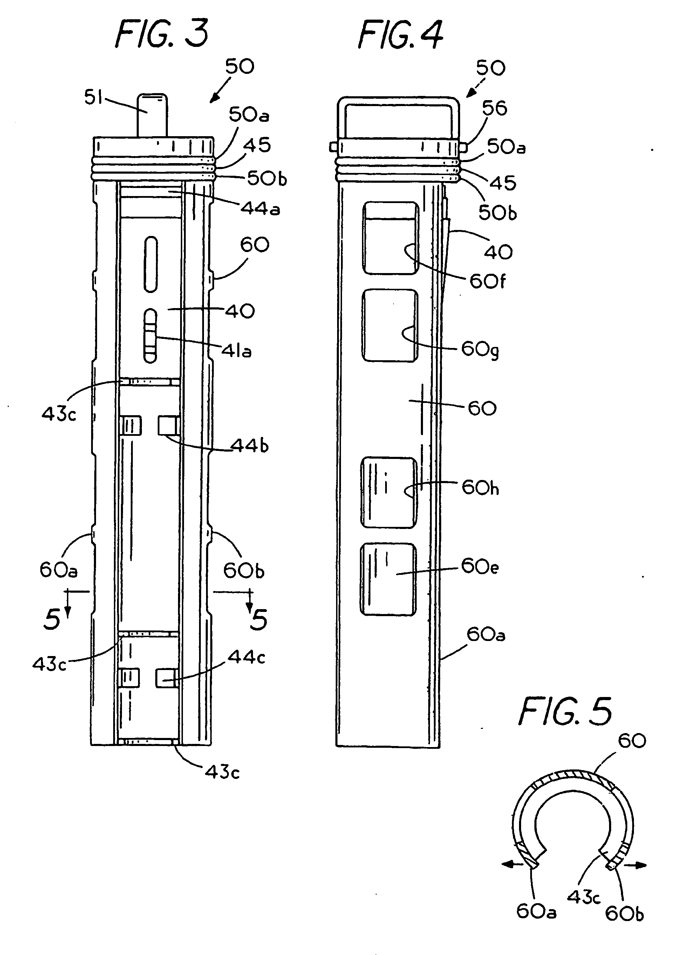

A cartridge dispenser is carried by a cartridge holder. Figure 3 shows a cartridge carrier or cartridge holder 50 for holding one or more cartridges in an end to end condition. Cartridge carrier 50 includes a handle 51 and an open body skeleton housing 60 having elongated flexible circumferential edges or ears 60a and 60b as part of the skeleton housing. The purpose of the skeleton housing is to allow water to flow through the skeleton housing and into and out of the cartridge held therein while at the same time provide a convenient tool for holding the cartridges in position in the dispenser housing and for removing the cartridges from the dispenser housing. Carrier 50 contains a first circumferential lip 50a that is spaced from a second circumferential lip 50b with a resilient sealing member such as an O-ring 45 located between the lips to allow one to seal the top of the cartridge carrier 50 to the inside of a dispenser housing to prevent flow past the top of the dispenser housing.

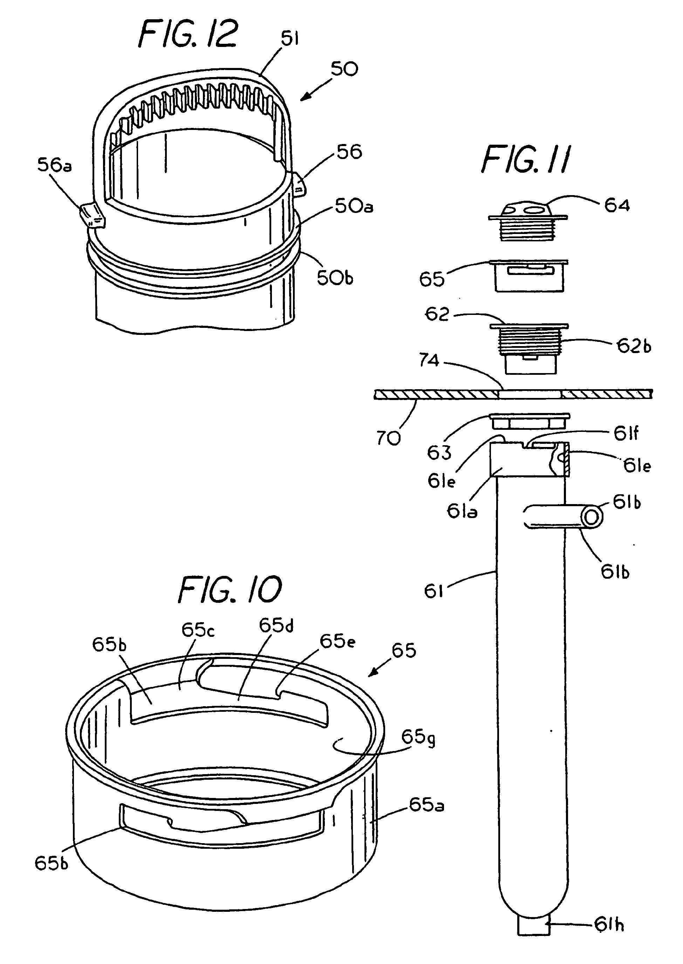

Figures 4 shows a side view of cartridge carrier 50 revealing two ears 56 and 56a for locks nag the cartridge carrier 50 into a dispenser locating housing cam 65, which is shown in Figure 10. Cartridge career 50 is preferable made from a polymer plastic that is flexibly thin yet sufficiently rigid to hold dispensing cartridges therein. Carrier 50 contains side opening 60f. 60e. 60g and 60h to permit ingress or egress of fluid through the skeleton housing 60. While only one cartridge dispenser 40 is shown in cartridge holder 50 additional cartridges holder can be placed in the cartridges holder to provide for different dispersants.

Figure 5 shows a sectional view of the cartridge carrier 50 taken along lines 55 to show the cylindrical open body skeleton housing 60 with ears 60a and 60b being resiliently displaceable radially outward (see arrows) to allow lateral insertion of the cartridge 40 therein. A lower stop 43c extends around the bottom of the skeleton housing to hold the cartridge in position.

In order to hold a plurality of dispenser cartridges in a fixed position in the cartridge holder 50 reference should be made to Figure 3 which shows internal circumferential bands that form a protruding partial circumferential ridge. That is, a top circumferential ridge 44a holds the top cartridge dispenser 40, a second identical partial circumferential ridge 44b can hold a second cartridge dispenser and a third identical partial circumferential ridge 44c located on skeleton housing 60 can hold a third dispensing cartridge therein. A circumferential mating stop, such as a mating circumferential recess 40a located on cartridge 40 allow one to maintain the cartridge 40 in the proper axial location in skeleton housing 60. The flexible ears 60a and 60b and the skeleton body 60 which flex radially outward can be configured to provide a slight frictional fit between the outer surface of the cartridge and the inner surface of the skeleton holder 60 to thereby hold the cartridge in position during insertion and removal of the cartridge from the dispensers as well as to avoid movement of the cartridge in the housing due to changing water conditions in the dispenser housing which could cause unnecessary noise.

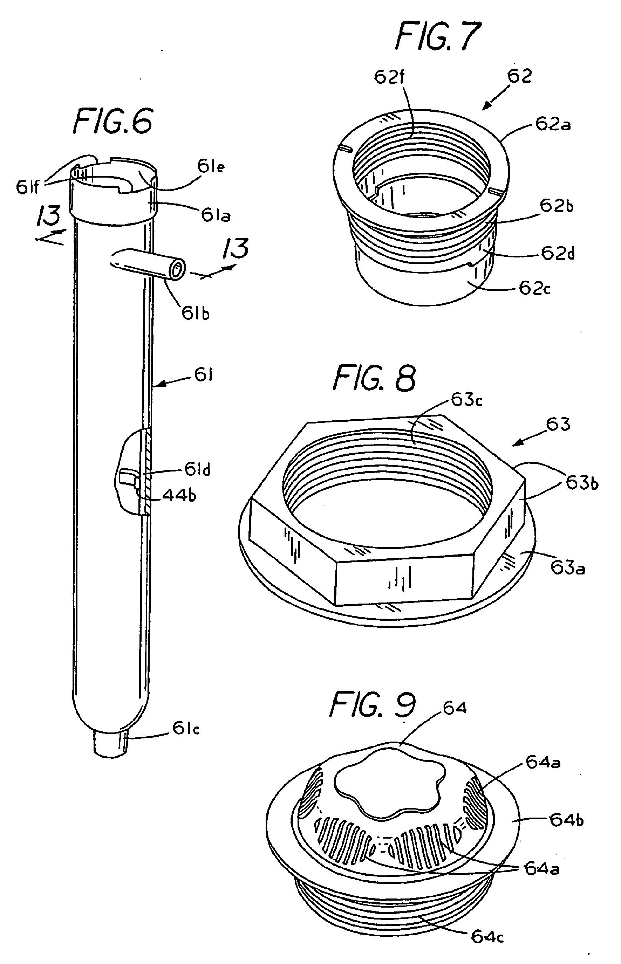

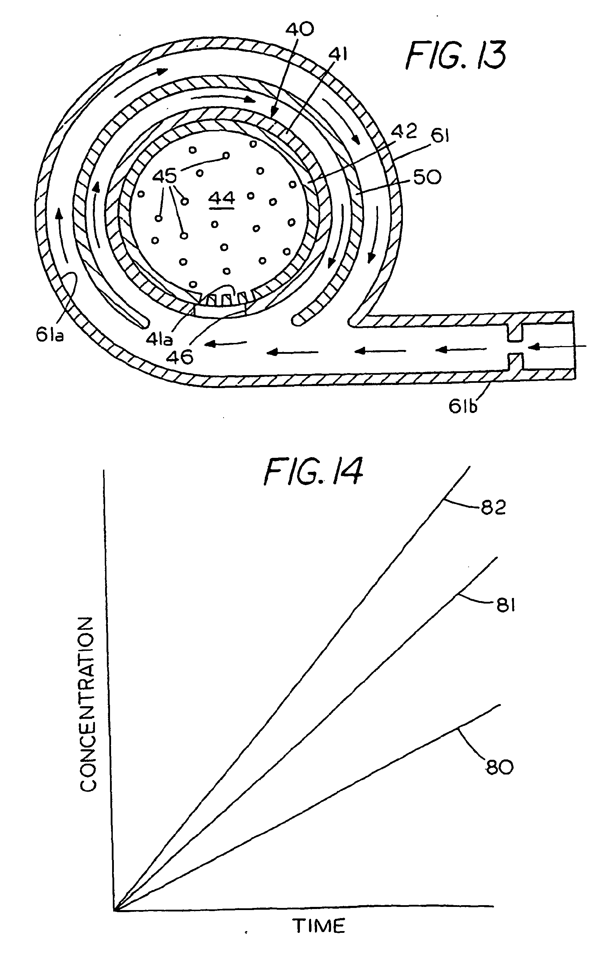

Figure 11 shows an exploded view of the portion of the dispensing system that is fixedly attached to a panel 70 and Figures 6-10 show the unassembled components for forming a dispensing system in either an existing fluid system or a new fluid system. The cartridge holder of Figure 3 is placeable directly into the housing 61 shown in Figure 6 and an isolated cross sectional view of the flow around the skeleton housing and the cartridge 12 is shown in general detail in Figure 13.

In order to illustrate the attachment and operation of the system with dispersant cartridges reference should be made to the dispersant housing components illustrated in Figures 6-10. The dispersant housing 61 shown in Figure 11 contains an upper end collar 61 for securement to a housing head, a circumferential inlet port 61 b. a central chamber 61d with a dispenser 40 therein and a lower outlet 61c. Dispenser housing 61 is mountable below a panel on a water system and is connected to the inlet and outlets as illustrated in Figure 1. Dispenser housing collar 61 a includes an internal cylindrical surface 61e for mating with a dispenser housing head and an alignment notches 61f for engaging with alignment members in the dispenser housing head 62.

Figure 7 is a pictorial view of the dispenser housing head 62 that is securable to the dispenser housing 61 through an adhesive or solvent bonding or the like. That is, in the preferred embodiment dispenser housing 61 and dispenser housing head 62 can be made from materials such as a polymer elastic and can permanently secured to each other through adhesives or the like. Dispenser housing head 62 includes a circumferential lip 62a for securing above a panel to support the dispenser housing head thereon. Located along the body of dispenser housing head 62 is a set of external threads 62b. an alignment member 62d and a male cylindrical mating surface 62c for insertion into the female cylindrical surface 61e on dispenser housing 61. Located within housing head 62 is a set of internal threads 62f for engagement with a removable cover. The use of a separate dispenser housing 61 with a collar permits one to assembly the unit on a system through placement of parts above and below the panel of the unit that is receiving the dispensing system of the present invention.

Figure 8 is a pictorial view of a dispenser housing securement nut 63 having a set of internal threads 63c. a set of hexagon lands 63b to allow one to rotate the nut 63 and a flange 63a for abutment against a bottom side of a panel on a circulation system.

Figure 9 is a pictorial view of a decorative cap 64 having a set of circumferentially spaced finger grips 64a. Cap 64 includes a flange 64b for abutting attachment to the top of the dispenser housing head 62 and a set of external male threads 64c for engaging female threads 62d on dispenser housing head 62.

Figure 10 is a pictorial view of the dispenser housing rocking cam collar 65 that is mounted in dispenser housing head 62 to enable one to lock a dispenser cartridge carrier 50 in position. Cam collar 65 includes a cylindrical body 65a with openings 65b on each side. Openings 65b includes a vertical slot region 65c and a lateral slot 65d with a lip 65e extending therein to lock a dispenser carrier therein. That is one pushes the cartridge carrier 50 (see Figure 12) down with ears 56 and 56a located in alignment with the vertical: slot region 65c and an identical vertical slot region on the opposite side. Once lowered the cartridge carrier is rotated to cause the ears 56 and 56a engage lateral stops 65b and 65c to retain the cartridge carrier therein.

Figure 11 shows a pictorial exploded view of a panel 70 and a dispensing cartridge housing 61 to reveal the members 64. 65 and 62 are located above the panel 70 and the nut 63 and dispenser housing 61 are positioned below the panel for the in situ assembly of the unit in a fluid circulation system.

The system can be assembled on site as an after market item or can be mounted on original equipment during manufacture of the water circulation system using conventional techniques.

Figures 11 shows that in the first step the dispenser housing head 62 is inserted though an opening 74 in a top panel 70. Once inserted the external threaded section 62b extends through the panel 70. Once threaded section 62b extends through the opening in panel 70 the housing nut 63 can be positioned on threads 62b and tightened to firmly secure the housing head 62 to panel 70. Thus the housing head 62 and housing nut 63 are sandwiched around panel 70. One is now in a position to complete the installation of the dispensing system.

With the housing head 62 secured to panel 70 the remaining components can be secured thereto from above and below the panel. That is, the dispenser housing 61. which is located below the panel 70. has internal mating surface 61e. which is securable to the external dispenser housing head cylindrical mating surface 62c. which extends through the panel. Preferably, the dispenser housing and dispenser housing head are formed of PVC pipe and can be joined together through the use of solvent cement or the like. By permitting the securement of the dispenser housing to the dispenser housing head below the panel, as shown in Figure 5. one can maintain a minimum size opening in the panel yet permit lateral extension 61 b on dispenser housing 61 since the dispenser housing 61 need not pass through the opening 71 in the panel 70.

Once the dispenser housing 61 and dispenser housing head 62 are secured to each other he dispenser housing locking collar 65 can be secured into the dispenser housing head 62. preferably through solvent cement or the like. The dispenser housing is now in a condition for receiving a cartridge carrier 50 and for locking the cartridge carrier in position therein.

In order to close the dispenser housing the dispenser cap 64 is secured to the female threads 62 in the dispenser housing head 62 though male threads 64c thereon. A stealing member such an is O-ring located beneath lip 64b to prevents fluids from escaping therepast.

Accordingly, the dispenser housing can be assembled in situ and secured to a fluid circulation system either in the field or as part of a manufacturing process through the steps of forming a hole in a panel, inserting a dispenser housing head therein, securing the dispenser housing head with a lock nut, securing the dispenser housing to the dispenser housing head while the dispenser housing head is secured to the panel. If a lucking system for the cartridge carriers is required a locking collar can be secured to dispenser housing from above the panel 70. To close off the system a dispenser cap can be rotatable secured into the dispenser housing head to prevent leakage.

It can be incorporated into a fluid system either during the manufacture of the system or as an after market item. Figure 5 shows an exploded view of the dispenser housing proximate a panel on a water system and Figures 6-10 show individual components of an embodiment of the present invention.

Figure 12 shows a partial top view of the cartridge carrier 50 that includes a handle 51 and a cylindrical body having a first tab 56 and a second tab 56 for forming locking engagement with the locking cam collar 65 (Figure 10).

Figure 13 shows a cross sectional view of housing 61 with a cartridge carrier 50 and a cartridge dispenser 40 coaxially positioned therein. A circumferential positioned port 61b directs the fluid between the peripheral surface 61g and the inner cartridge carrier 50 and cartridge dispenser 40. The introduction of the fluid circumferentially induces a downward vortical flow between upper entry port 61b and lower discharge port 61c. The arrows indicate the general circular flow around the dispenser housing 61 and dispenser cartridge 42 to allow the dispersant to be dispersed into the fluid in the container 10.

It has been found that by introducing fluid tangentially one can produce a stable uniform flow pattern, i.e. the fluid flows uniformly past the openings 46 and 41a even if the flow rates are changed. By maintaining a stable flow pattern past the openings 46 and 41a it allows one to predictably control the dispersant rate by changing the flow rate. That is, the faster the flow rate past the cartridge 40 the greater the dispersant rate and conversely the slower the flow rate the slower the dispersant rate.

A feature of the present invention is that not only can one predicable determine the dispersant rate by changing the flow rate but it has been found that as the number of openings are made available in the cartridge dispenser the concentration of the dispersant in the housing increases in a predictable manner.

Figure 14 illustrates the concentration of the dispersant on the ordinate axis and with time on the abscissa axis. There different curves 80. 81. and 82 are shown to illustrate the dispersant rate under different size access areas in the dispersant cartridges. That is, curve 80 is the dispersant level as a function of time for a first number of access openings in cartridge 40. the curve 81 is the dispersant level as a function of time for a large number of access opening in cartridge 40 and curve 82 is the dispersant level as a function of time for a yet larger number of access opening in cartridge 40. Thus one way to control the amount of dispersant is to increase the area of the openings into the dispersant cartridge. In still another method one can increase the flow rate through the dispersant housing which also results in an increased dispersant level. While it is not fully understood it is believed that use of a circumferential input eliminates instability in flow patterns that can occur when fluid streams impinge on objects. As a result if the flow pattern remains stable one can uniformly increase or decrease the flow rate to correspondingly increase or decrease the dispersant rate.

Thus with the present invention one can establish a stable flow pattern past the access openings which results in one being able to control the dispersant rate.

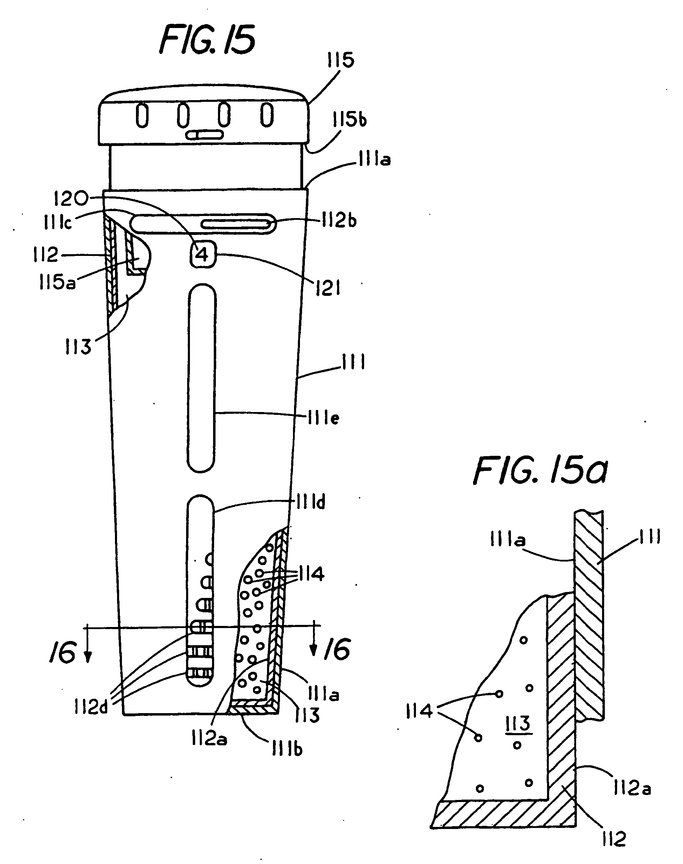

Figure 15 is a partial sectional view of the universal cartridge 110. Universal cartridge 110 comprises an outer cup-like frusto conical sleeve 111 having an open top 111a and a closed bottom 111b. Extending in a circumferential direction partially around sleeve 111 is a housing guide slot 111c. Extending in an axial direction and located along an axial surface element of sleeve 111 is a first elongated diffusion port 111d and a second elongated diffusion port 111e. In the embodiment shown the diffusion port 111d and 111e are shown on one side of housing 111 and a second set of identical diffusion ports are located diametrically opposite from the first set of diffusion ports. In general, housing 111 is made from a rigid material which is resistant to the fluid requiring dispensing therein. A preferred material is a polymer plastic such as Exxon Mobil PP1024 E4 which is a resin that is sold by Exxon Mobil Corporation.

Located at the top portion of cartridge 110 is a float 115 that has sufficient buoyancy to maintain at least part of the universal cartridge 110 in a submerged condition and part of the universal dispenser in an unsubmerged condition. Float 110 can comprise an air chamber 115a that provides buoyancy to the cartridge. If desired the chamber 115a can be filled with a buoyant material other than air. Float 115 allows the universal cartridge dispenser 110 to float in either a free floating or fixed position in stagnant fluid system.

Extending around the peripheral region of float is is a lip 115b for securement of the universal cartridges 110 in a fixed position in a cartridge carrier or the like. The lip enables one to secure the universal cartridge 110 in a moving fluid environment to enable dispensing of a dispersant from the universal cartridge 110 to a surrounding fluid environment.

Located within sleeve 111 is a frusto conical housing 112 having a dispersant chamber 113 therein for containing a dispersant 114 therein. Housing 112 has an outer mateable surface 112a that forms a frictional engagement with an inner mateable surface 111a of sleeve 111 I (see Figure 15a). A radially protrusion 112b having a length less than the length of the circumferential slot 111c allows one to partially rotate the housing 112 with respect to the sleeve 111. That is, the protrusion 112b limits the circumferential rotation through engagement with the ends of circumferential slot 111c. In addition, the protrusion 112b can maintain the housing 112 and sleeve 111 in axial operating condition with respect to each other since axial displacement is limited. Thus the housing 112 includes a circumferential protrusion 12b and the sleeve 11 includes a circumferential recess 111c with the circumferential protrusion 112b and recess 111c coacting to prevent an axial displacement of the housing with respect to the sleeve so as to maintain the sleeve and housing in proximate position to each other but to permit at least partial rotation of the sleeve 111 with respect to the housing 112. Housing 112 comprises a rigid material which is resistant to the fluid requiting dispensing therein. A preferred material for housing 112 is a polymer plastic.

In the embodiment shown the diffusion port 111e and diffusion port 111e in sleeve 111 extend in in axially or longitudinal direction and the housing diffusion ports 112d extend in lateral or a circumferential direction around housing 112. The housing 112 contains a set of reference marks 120 and the sleeve contains an opening 121 with only one of the set of reference marks visible therein so as to let a user know a dispersant setting of the universal cartridge. That is, as the sleeve 111 is rotated with respect to the housing 112 more of the Circumferential diffusion ports 112d on housing 112 become visible through the elongated diffusion ports 111d and 111e and the reference mark 120 allows the user to know the relative rotational position of the housing with respect to the sleeve and hence the diffusion transport area from the interior or the universal dispenser cartridge to the exterior of the cartridge.

In order to maintain the housing 112 and the sleeve 111 in fixed position with respect to each other under fluid conditions the housing mateable surface 111a and the sleeve mateable surface 112a are placed in sufficient frictional engagement with each other so as to remain in a fixed rotational position with respect each other when the universal cartridge is placed in either a stagnant body of fluid or a moving fluid. However, once the universal cartridge is removed an operator can overcome the frictional resistance and rotate sleeve I I with respect to housing 112 in order to change the transport area from within the dispenser to outside the dispenser.

The housing 112 has a frusto conical shape and the sleeve 111 has a frusto conical shape. Consequently, a full frictional engagement between the mateable surface 112a of housing 112 and mateable surface 111a of sleeve 111 does not occur until the sleeve 111 and housing 112 are in the axially fixed position with respect to each other as shown in Figure 15. As a result the configuration of the housing and the sleeve allow for substantial unhindered assembly of the housing and the sleeve since a diametrical clearance between the housing and the sleeve is maintained until the sleeve and housing are almost in their axial operating position. Consequently, only during the last axial displacement of the housing with respect to the sleeve brings the sleeve 111 and housing 112 into the frictional engagement with each other, which enhances assembly of the universal cartridge.

Figure 15a is a cutaway view showing the housing 112 and the sleeve 111 to illustrate the interaction of mateable surface 111a of sleeve 111 which is in frictional engagement with mateable surface 112a of housing 112. In this condition the two mateable surfaces engage each other to prevent or impede flow flowing therebetween. Consequently, the access of fluid into chamber 113 is limited to the transport passage defined by the alignment of the diffusion ports in sleeve 111 and the diffusion ports in horsing 112.

In order to illustrate the operation of the universal cartridge dispersant in a stagnant fluid system a sectional view taken along lines 16-16 of Figure 15 is shown with the universal cartridge 10 surrounded by a stagnant body of fluid. By stagnant fluid it is meant fluid that has no consistent movement of fluid therepast. Examples of stagnant fluid locations would be in a hot tub or other container wherein the circulation of a fluid past the dispenser is due to random conditions rather than to a moving fluid stream.

Housing 112 has a chamber 113 therein with dispersant located in the chamber. Typically, the dispersant can be any of the halogens or minerals or the like that yield a material that provides the necessary fluid treatment. Examples of minerals include ion yielding materials that can be used to treat water in hot tubs or swimming pools to rid the water their of unwanted organism. One particularly well suited dispersant material uses silver chloride as an ion yielding material.

In use of the universal cartridge the zone of highest concentration of dispersant is located in chamber 113 and is designated by Z₀. Located external to dispenser 110 and the diffusion ports 111d and 112d is an exterior zone Z₃. In stagnant operation of the dispenser 110 the dispersant 110 diffuses or disperses from the zone of higher concentration Z₀ to the zone of lower concentration Z₃ as indicated by the dashed arrows. The dispersant then continues to diffuse throughout the body of fluid. In general concentration dispersion from one zone to another zone does not require a moving fluid to transport the dispersant. As a consequence the setting of the housing 112 and sleeve 111 so as to maintain a fixed transport path between the chamber 13 and the exterior of the cartridge 110 allows the dispersant contained therein to disperse from zone Z₀ to zone Z₃ at a predictable rate. Consequently, one can obtain the desired level of dispersant in the body of fluid.

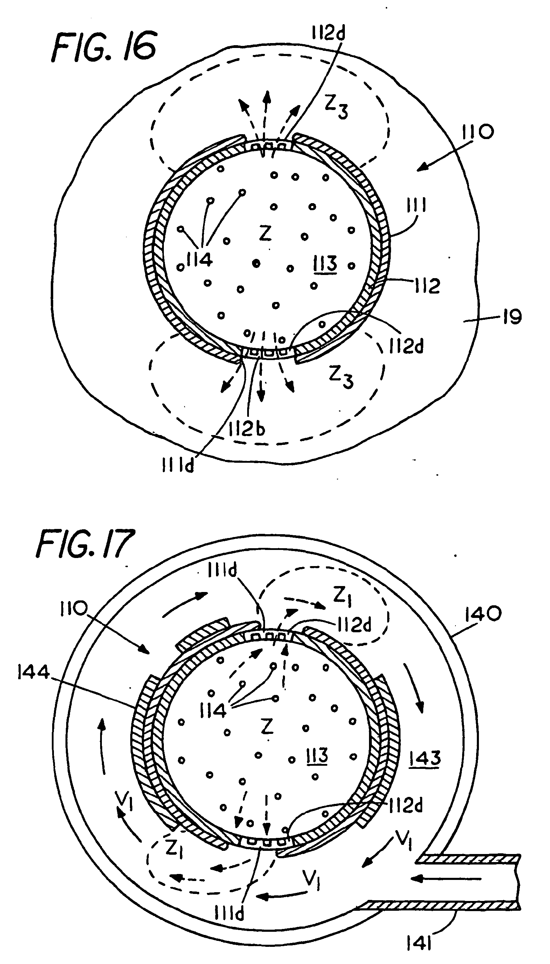

In order to illustrate the operation of the universal cartridge 110 in the presence of a moving fluid reference should be made to Figure 3 which shows cylindrical housing 140 having a tangential inlet 141 for directing fluid into the annular chamber 143 located between housing 140 and the universal cartridge 10. The universal cartridges shown in Figure 17 is identical to the universal cartridge shown in Figure 16 except that a cartridge career 144 is shown holding the universal dispenser in a concentric position within cylindrical housing 140. An exit port (not shown) is located below the universal cartridge 110 to allow the fluid therein to be discharged.

In operation the fluid enters on port 141 and flows laterally around the periphery of dispenser 110 with the fluid flow indicated by the solid arrows and reference V₁. The interior of the dispenser 110 contains a zone Z₀ where the dispersant 114 is at the highest concentration. Located immediately exterior to the diffusion ports are the zones Z₁ which are slightly distorted by the moving fluid. The diffusion of dispersant from the zone Z₀ to the zones Z1 occurs substantially independent of the fluid motion since the fluid circulates laterally past the universal cartridge 10. Thus even though the fluid external to the dispenser may have perturbations or go from laminar to turbulent or vice versa one is able to maintain a dispersion rate substantially a function of the velocity of the fluid stream. That is, the diffusion ports 111d and 112d allow migration or diffusion of dispersant from one zone to another zone without the need for direct flow from the dispersant chamber 13 to the exterior of dispenser 110. As the dispersant in zone Z₁ is carried away by the moving fluid stream it reduces the dispersant concentration in zone Z₁ thus allowing the dispersant to diffuse at a rate dependent on the difference in dispersant concentrations between Z₁ and Z₃.

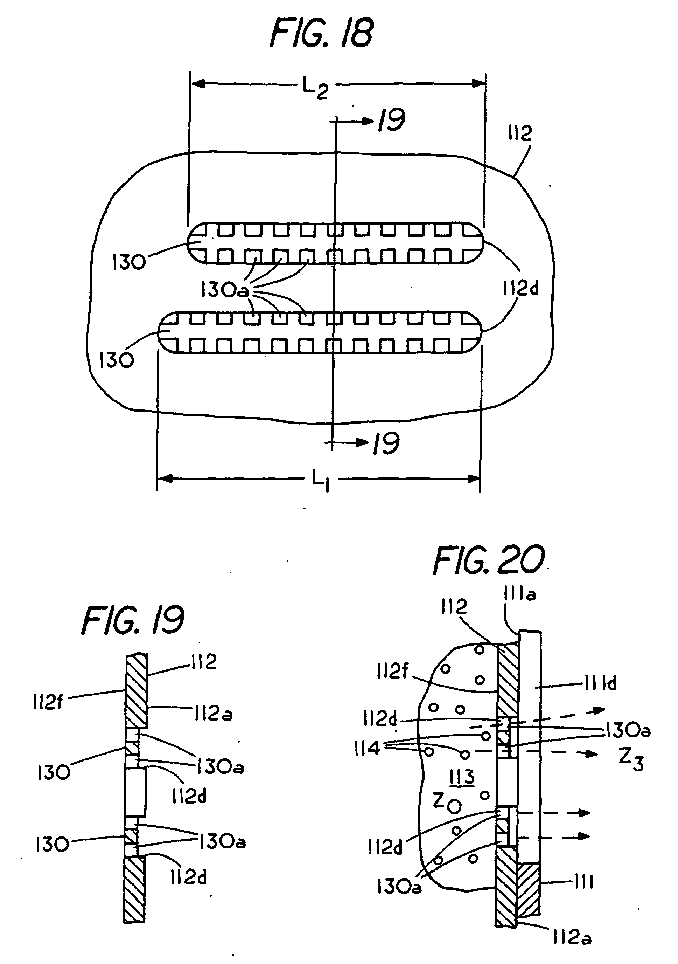

Figure 18 is an enlarged view of a portion of housing 112 showing two of the recessed diffusion ports 112d. As can be seen the lower diffusion port has a length L₁ which is longer than the adjacent diffusion port which has a length L₂. The purpose of having diffusion ports of different lengths is to provide for one to adjust the transport area from within the housing by stealing off some of the diffusion ports. Each of the diffusion ports is shown with a grid 130 that extends laterally and transversely to the elongated diffusion ports 112d. The transport area comprises the open areas 130a in the grid 130. Thus any fluid flowing though diffusion port 112d faces frictional sidewall resistance due to the grid sidewalls that surround each of the open areas 130a.

Figure 19 is a sectional view taken alone lines 19-19 of Figure 18 and shows the elongated recessed diffusion ports 112d with the grid 130 therein. Each of the grids 130 are characterized by having a front face recessed from the mateable surface 112a and a back face substantially coplanar with the housing rear surface 112f, Thus the recessed diffusion ports 112d include multiple passages 130a that are not the full width of the elongated diffusion port 112d.

Figure 20 shows the section view of Figure 19 with a portion of the sleeve and the dispersant positioned proximate thereto to illustrate the diffusion path from the zone Z₀ to the exterior zone Z₃. The diffusion from zone Z₀ to Zone Z₃ must pass through the openings 130a and the opening 111d in sleeve 111. The dashed lines with arrows indicate the diffusion of the dispersant from the area of higher concentration Z₀ to the area of lower concentration Z₃ without the aid of any fluid transport. That is, with the present invention the separation of the interior of the housing from the exterior region of the sleeve I I provides a transport area which has its minimum dimension at the interior surface 1112f and its maximum dimension at the surface 111L. Fluid motion between the interior of housing 112 and the exterior region of zone Z₃ is not necessary to dispense material. In fact, the arrangement of a grid like structure functions to provide resistance to fluid flowing therethrough by providing a large sidewall surface area that can introduce frictional resistance to fluid flow therethrough. That is, for a given flow area the amount of resistance to flow therethrough can be increased by increasing the sidewall area and hence the frictional resistance. Thus the universal cartridge includes a discouragement for direct flow therethrough but yet allows for diffusion of the dispersant therethrough which can occur independent of any fluid transfer.

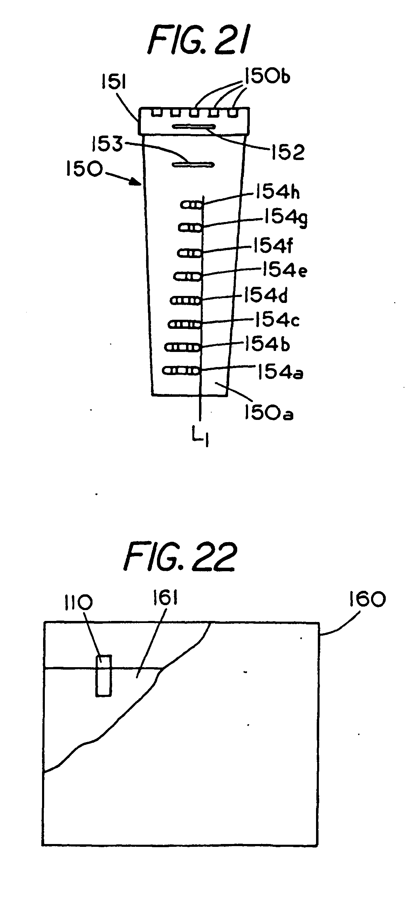

Figure 21 is a front elevation view of an alternate embodiment of the dispersant container 150 of a cartridge dispenser. Dispenser container 150 has a chamber therein that allows one to contain and hold the dispersant material in a dispersible condition therein. In the embodiments shown the open top cup-like dispersant container 150 comprises a tapered outer sidewall surface 150a. i.e. a frusto-conical shape. Sidewall surface 150a is sufficiently smooth so as to permit sliding engagement with an inner housing surface on the cartridge dispenser that has the same taper to it's surface. Located vertically along a longitudinal surface element of dispersant container 150 is a set of openings 154a, 154b, 154c, 154d, 154e, 154f, 154g, and 154h of equal height that gradually increase in length. In the embodiment shown each of the openings contain a grid and each are of different length but all are of the same width. The openings each have the right edge located along a vertical line L₁ that extends in an axial direction. The set of openings permit the dispersant in a dispersant chamber in dispersant container 150 to be dispersed through the set of opening therein. The top of dispersant container 150 includes an annular band 151 having raised ribs or gripping members 150b thereon that encompasses the peripheral region of the dispersant container 150 to provide a grasping region for a user. Located on band 151 is an elongated slot 152 for forming mating engagement with a protrusion on one side of a float and similarly located on the oppose side of band 151 is a second elongated slot (not shown) for forming supporting engagement with a protrusion on the opposite side of the float.

The container 150 has a tapered outer surface that is identical to the taper of the inner surface of housing 111 which allows it to tightly mates with the inner tapered mating surface of housing 111. As a consequence one can form a leak resistant barrier between the housing 111 and an inner container 150, in addition, with the openings in alignment one can provide for a uniform and substantially linear increase of the dispersant into a liquid exterior to the dispenser whether the dispenser is used in a stagnant liquid environment or a moving fluid environment.

Figure 22 shows a container 160. such as hot tub or the like which contains a liquid 61 with the dispenser 110 floating in the liquid. In this embodiment the dispenser is dispensing material in a stagnant environment.

Thus, the universal cartridge permits controllable delivery of a dispersant in either a stagnant liquid or a moving liquid environment such as found in a hot tub, spa or swimming pool. The universal cartridge includes a housing 112 having a dispersant holding chamber 113 therein and a dispersant 114 which is dispersant located in said dispersant holding chamber 113. In operation the dispersant generates a first dispersant concentration in chamber 113 in the presence of a liquid such as water in dispersant holding chamber 113. A support member 115b on the universal cartridge for maintaining the universal cartridge 110 in a fixed condition proximate a moving liquid stream. A body of liquid 109 located outside chamber 113 with at least a portion of the body of liquid located within chamber 13 with the body of liquid 109 comprising a liquid for supporting transfer of a liquid treatment dispersant I 14 from the dispersant holding chamber 113 to the body of liquid 109 located outside chamber 113. A float 115 on the universal cartridge for maintaining the universal cartridge 10 in a partially unsubmerged condition in the body of liquid. A set ports 112d extending through said housing to form a liquid passage to connect the liquid in the chamber 113 with the body of liquid 109 located outside the chamber to enable the dispersant 14 in the chamber 113 to be transferred into the body of liquid located outside the chamber to thereby increase the concentration of dispersant in the body of liquid outside the chamber whether the body of liquid outside of chamber is 113 stagnant body of liquid 109 in a moving liquid stream 109'.

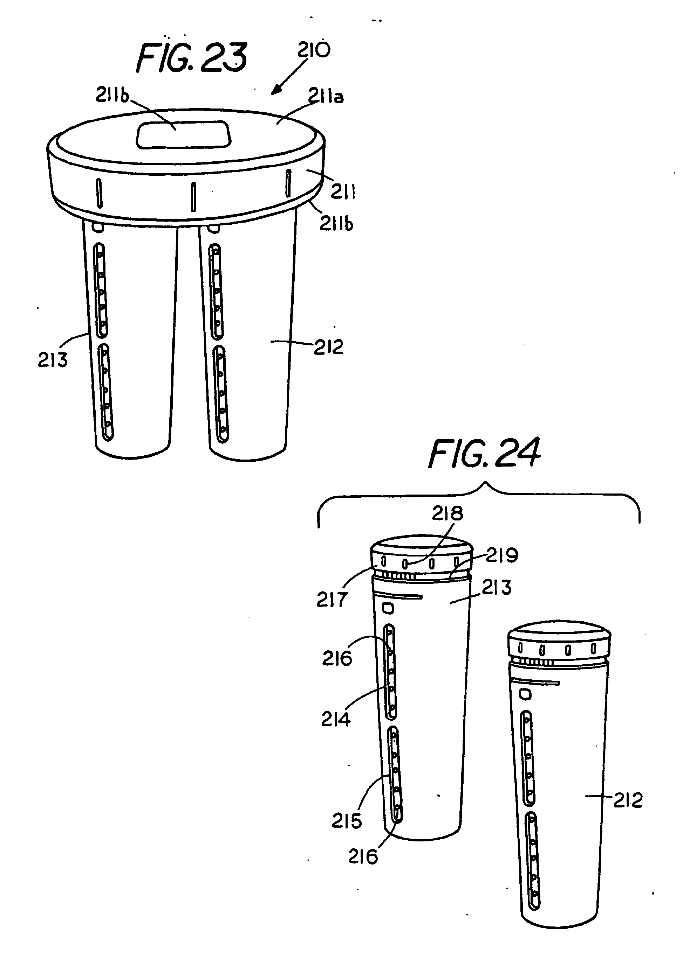

Figure 23 shows a floating dispenser system 210 comprising an elongated cartridge holder 211, which is preferable a buoyant member, having a top side 211 a and a bottom side 211b with the top side normally located at least partially above a water surface and the bottom side 211b normally located below the water surface when the system is placed in a body of water. Removably attached to the bottom side 211b is a first cartridge dispenser 212 containing a first fluid dispensable material (not shown). The first cartridge dispenser 212 can be temporarily securable to the bottom side 211 b of holder 211 through a friction fit, threads or other engaging members to enable one to both secure and remove the cartridge dispenser from the holder 211. Similarly, attached to holder 211 is a second cartridge dispenser, containing a second fluid dispensable material (not shown) with the second cartridge dispenser also temporarily securable to the bottom side 211b of cartridge holder 211 to enable dispensing of fluid treatment material therefrom. Thus the floating dispensing system enables one to have either or both of cartridge dispensers in a condition to dispense fluid treatment material therefrom as the floating dispensing system floats in a body of fluid. While the present system is suitable for dispensing materials in any type of fluid the present invention is ideally suited for use in recreational liquids such as the water systems found in spas, hot tubs and the like.

Figure 24 shows the two cartridge dispensers 212 and 213 in a side by side condition. As the two cartridge dispensers are identical only one is described herein. Cartridge dispenser 213 includes a cap 217 that connects to a cartridge dispenser container 219 having a set of openings 216 therein. A sleeve like member or dispersant rate selector 213 circumferentially encompasses the dispenser container 219 and has a first elongated slot 214 and a second elongated slot 215 which is shown in alignment with the holes or openings 216 in the dispenser container 219. Dispenser container 217 is rotateable with respect to dispersant rate selector 213 to permit more or less openings 216 to be visible in the elongated slots 214 and 215 and thus provide a fluid path from the interior of the cartridge dispenser container 217 to the exterior fluid surrounding the cartridge dispenser container 217. With more of the openings 16 visible in elongated slots 214 and 215 more fluid can get access to the contents of the cartridge dispenser container 217 and with less openings visible in elongated slots 214 and 215 less fluid can get access to the contents of the cartridge dispenser container. As the dispenser cartridges 212 and 213 are identical only one is described herein: however, the present system is suitable for use with cartridges dispensers that may not be identical.

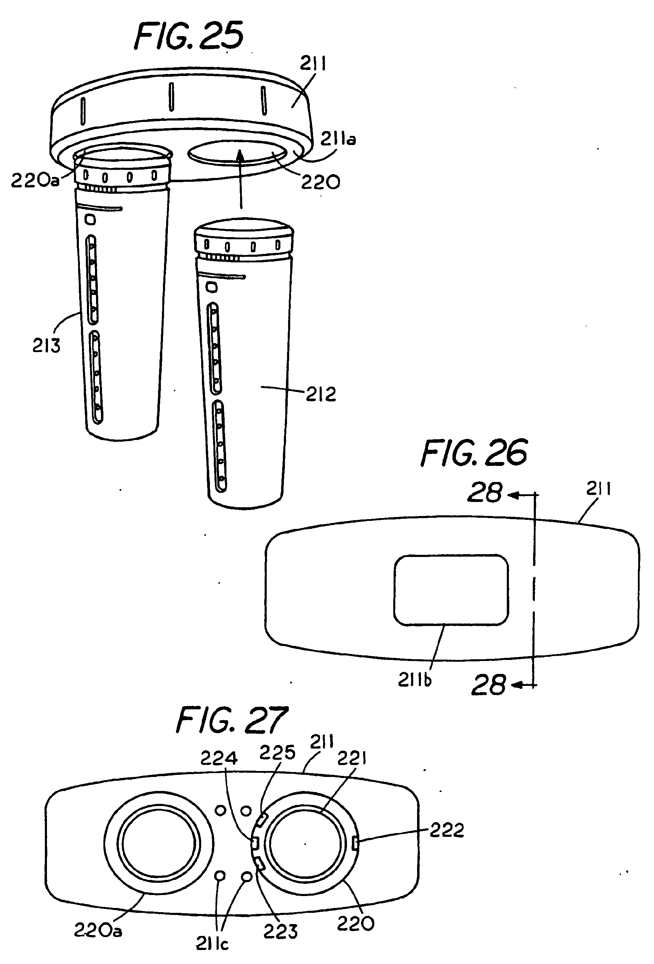

Figure 25 shows the elongated cartridge holder 211 with a first cylindrical cartridge recess 220 extending upward in the bottom of holder 211 and a second cartridge recess 220a extending upward into holder 211. Located in a recess 220 in holder 21 is a fastening device for temporarily securing the cartridge dispenser 212 to the holder 211 and similarly located in the opposite end of holder 211 is the second recess 220a. Located within the second recess 220a of holder 211 is a second fastening device for temporarily securing the cartridge dispensers 213 to the holder 211. An advantage of having a removable cartridge is allows one to provide for interchanging cartridge dispensers or to allow one remove and replace a spent cartridge dispenser. This feature is particularly beneficially when one of the materials within the cartridge dispenser has a longer dispensing life than the other.

Consequently, only the spent cartridge dispenser needs to be replaced rather than the entire system.

In the preferred embodiment, when used in water treatment, the floating dispenser system 210 can hold two different dispensing materials. To aid the user in identifying the cartridges containing the different dispensing materials, when the cartridge dispensers have the identical shape and size one can color code the cartridge dispensers, for example, one cartridge could be a blue mineral cartridge 212. which yields ions, and the second cartridge could be a yellow bromine cartridge 213 which yields bromine. The color coding permits a user to quickly identify the contents of the cartridge and the purpose of the cartridge dispenser. To replace a spent cartridge the user merely removes the spent dispenser cartridge out of the holder and secures a fresh cartridge into position .

Figure 26 shows a top view of the cartridge holder 211 illustrating that the holder 211 has an elongated shape. A top region 211 b can carry product identifying information or instructions on the use of the holder with cartridge dispensers. Preferably, holder 211 is made of a lightweight material and includes rounded corners so as not be injurious to the occupants if allowed to float in a spa or hot tub containing the holder and the occupants.

Figure 27 is a bottom view of cartridge holder 211 showing the side by side location of recess 220 for holding a first cartridge dispenser and recess 20a for holding a second cartridge dispenser. As the recess 220 and 220a and the cartridge engaging members therein are identical only one is described herein. Cartridge holder 211 is hollow and includes a set of four holes 211c allow for fluid to flow in or out of cartridge holder 211.

Located in cylindrical recess 220 is an annular stop 221 for engaging the top of a dispenser cartridge, which can be centrally located in recess 220. Shown projecting radially inward in recess 220 are a set of stops 222. 223. 224 and 225. In the embodiment shown stop 22 is a fixed stop that projects radially inward to engage and support one side of a cartridge dispenser. In contrast, the stops 23. 224. 225. which are located diametrically opposite to support the opposite side of a dispenser cartridge, are retractable stops that move radially inward to permit engagement with a cartridge dispenser and radially outward to permit disengagement with a dispenser cartridge.

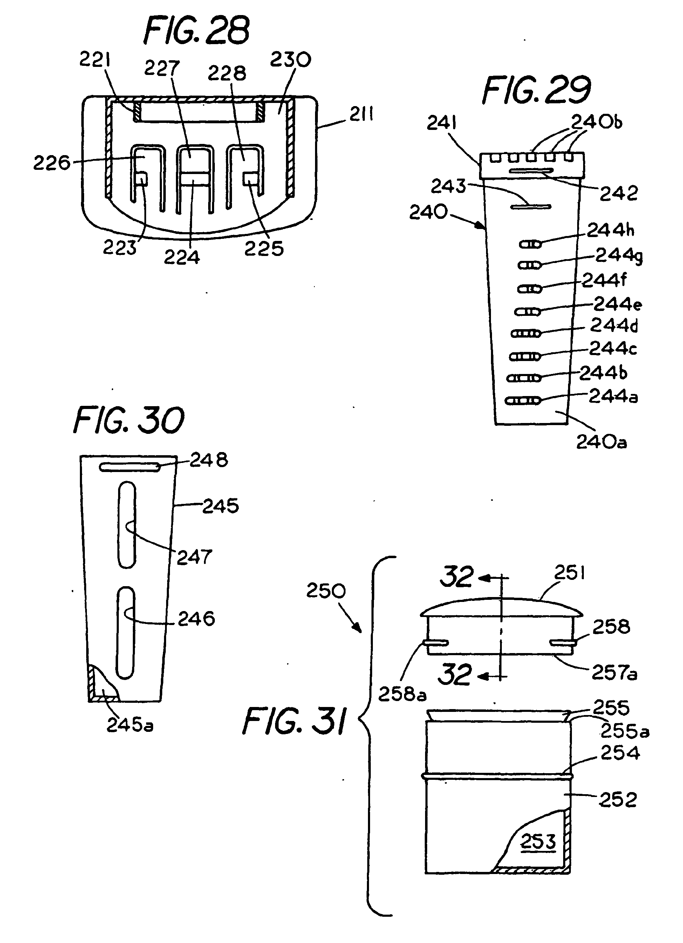

Figure 28 shows a sectional view showing the retractable stop 223 mounted on a resilient cantilevered member 226 that has been formed as part of the cylindrical sidewall 230 of holder 21 by forming a U-shaped slot in sidewall 230. Similarly, retractable stop 224 is mounted on a resilient cantilevered member 227 that has also been formed in the cylindrical sidewall 230 by forming a U-shaped slot in sidewall 230. The retractable stop 225 is also mounted on a resilient cantilevered member 28 that likewise has been formed in the cylindrical sidewall 230 by forming a U-shaped slot in sidewall 230. The purpose of having retractable stops is to permit insertion of and securement of a dispenser cartridge to the holder 211 as well as to permit removal of a dispenser cartridge from holder 211, and at the same time maintain a resistance to removal of the cartridge dispenser so as to ensure that when the holder 211 is in use in an environment that can jostle the holder and cartridges the holder 210 will maintain the two cartridge dispensers in the holder 211 in a side-by-side condition.

In order to illustrate the interactive component parts of the cartridge dispenser for use with the holder 211 as well as the component parts that permit engagement of the cartridge dispenser with the holder 211 reference should be made to Figures 29-33 which show the four components of a cartridge dispenser in a disassembled condition as well as an assembled condition.

Figure 29 is a front elevation view of the dispersant container 240 of a cartridge dispenser. Dispenser container 240 has a chamber therein that allows one to contain and hold the dispersant material in a dispersible condition therein. In the embodiments shown the open top cup-like dispersant container 240 comprises a tapered outer sidewall surface 240a. Sidewall surface 240a is sufficiently smooth so as to permit sliding engagement with a surface on another component part of the cartridge dispenser. Located vertically along a longitudinal surface element of dispersant container 240 is a set of openings 244a, 244b, 244c, 244d, 224e, 244f, 244g, and 244h. In the embodiment shown each of the openings contain a grid and each are of different length but all are of the same width. The openings each have the right edge located along a vertical line that extends in an axial direction. The set of openings permit the dispersant in a dispersant chamber in dispersant container 240 to be dispersed through the set of opening therein. The top of dispersant container 240 includes an annular band 241 having raised ribs or gripping members 240b thereon that encompasses the peripheral region of the dispersant container 240 to provide a grasping region for a user. Located on band 241 is an elongated slot 242 for forming mating engagement with a protrusion on one side of a float and similarly located on the oppose side of band 241 is a second elongated slot (not shown) for forming supporting engagement with a protrusion on the opposite side of the float.

Figure 30 is a front elevation view of the dispersant rate selector 245 of the cartridge dispenser. Dispersant rate selector 245 comprises a tapered container having an inner smooth surface sidewall 245a that slidingly mates with the exterior surface 240a of dispersant container 240 and a bottom 245a. Dispersant rate selector 245 is slightly larger than dispersant container 40 to allow dispersant container 240 to nest within dispersant selector 245. Dispersant selector 245 includes a first elongated opening 247 and a second elongated opening 246 that extend in an axial direction along the tapered dispersant rate selector 245. As dispersant container 240 and dispersant rate selector 245 nestable mate with each other one can rotate the selector 45 with respect to the container 240. As a result one can align more or less of the set of openings 40a-40g with the elongated openings 246 and 247 thus controlling the size of the dispersant path from interior of container 245 to the exterior of selector 245.

A feature of the present invention is that a float is included that not only provides sufficient buoyancy to maintain the cartridge dispenser and the contents in a buoyant condition but provides a cover for the dispenser container 240 to retain the contents in dispenser container 240. The float 250 comprises a two-part float that can be assembled without the need for welding, adhesives or the like. The dispenser container 240 is shown in an exploded view in Figure 31 comprising a cylindrical cover or cap 251 having an empty chamber therein and a cylindrical base 252 having an empty chamber 253 therein. Float base 252 includes an outer annular lip 254 that abuts against bottom edge 251a of cover 251 and a top tapered lip 255 that forms locking engagement with an interior latching member in cover 251 to provide a leak-proof junction therebetween. Cover 251 comprises a general cylindrical shaped container with a domed top and sidewall with a first radial protrusion 258 and a second radial protrusion 258a that are located diametrically opposite from each other. First radial protrusion 258 is for forming locking engagement with first elongated slot 242 on one side of dispersant container 240 and second radial protrusion 258a forms locking engagement with a second elongated slot (not shown) on the opposite side of dispersant container 240.

A teak-proof mechanical locking engagement between the float cover 25 and the float base 252 permits one to form a float without the aid of adhesives, welding or the like. When float cover 251 is assembled to the float base 252, one forms a float that can buoyantly support the dispersant container 40 and the contents therein. Float base 252 and float cover 251 are preferably made of a polymer plastic with the side walls of sufficient thickness to withstand fluid pressure thereon without collapsing and sufficiently thin so as to flex to enable one to slide the protrusion 258 and 258a on cover 251 into interlocking engagement with the mating elongated slots on dispersant container 240.

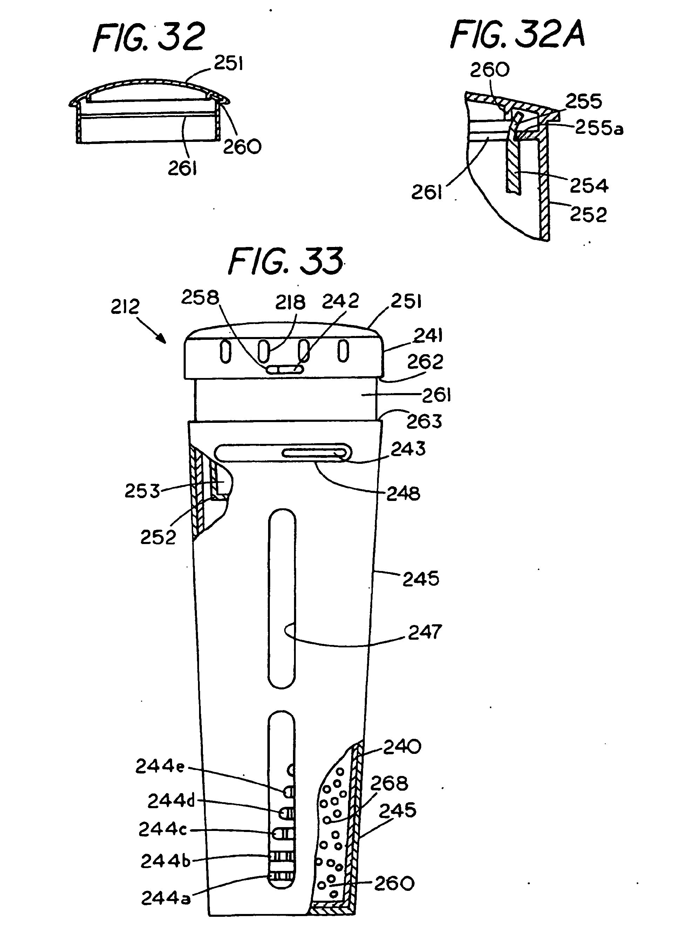

Figure 32 is a sectional view of the cover 251 of the float showing that an annular top lip 260 and an annular bottom lip 261 are concentricity positioned and extend around the inner peripheral top surface of float cover 251 with top lip 260 having a smaller diameter than bottom lip 261.

Figure 32A is a detail view of the inter-engaging lips or rings 260 and 261 of float cover 251 in engagement with annular lip 255 of float body 252 to form a leak-proof condition between the float cover 251 and the float base 252. As can be seen in Figure 32A the float 250 need not be welded but can be formed from a cup-shaped float cover 251 and a cup-shaped float base 252 that can be snapped in place much like one seals a food storage container. Once snapped in place the outward angled projection of lip 255 prevents separation of the cover 251 from the base 252 since the lip 255 and lips 260 and 261 form mechanical engagement with each other.

The present application includes the method of making a float for a cartridge dispenser buy forming a float base 252 with a top lip 255 and a float cover 252 with inter-engaging lips 260 and 261 and then snapping the top lip 255 of the base into engagement with the inter-engaging lips 260 and 261 of the float cover 252 to form a leak-proof junction therebetween which allows one to form a float without the use of welding, gluing or other material jointing methods. Once the float 250 is assembled one can insert the float onto the dispensing container 240 and the float becomes a cover to dispenser container 240 to retain the contents of the dispenser container therein. That is, one can place the dispersant material in container 240 and then insert and lock the float 250 on the top of container 240 to retain the dispersant material in container 240. That is, the float 250 forms a lockable cover for the dispersant container 240 through the engagement of protrusions 258 and 258a with the elongated transverse slots in dispersant container 240. After the dispenser container 240 is capped one can nest the dispersant container 240 with the float 250 in the dispersant rate selector 245 and slip the transvere protrusion 243 on dispersant container 240 into the transverse elongated slot 248 on one side of dispenser selector 245 and an identical transverse protrusion located on the opposite side of container 240 and an identical transverse elongated slot located on the other side dispersant rate selector 245.

Figure 33 shows an assembled view of cartridge dispenser 212 partially in section to reveal the location and interaction of the four component parts of the snap together cartridge dispenser 212. As can be seen in Figure 33, the domed top portion of float cover 251 is located at the top of cartridge dispenser 212 and protrudes therefrom. The protrusion 258 on float cover 258 is engaged with the transverse slot 242 on dispenser container 240 to interlock the two together on one side and the protrusion 258a on float cover 251 and an identical transverse slot on other side interlock with each other so that the buoyancy of the float 250 can support the dispersant container 241 and the contents therein.

The dispersant rate selector member 245 is shown rotationally retained on dispersant container 240 by the inter-engagement of radial protrusion 243 into elongated slot 248. Similarly, a radial protrusion and elongated slot is located on the other side of dispenser cartridge 212 to permit the partial rotational displacement of dispersant rate selector 245 with respect to dispersant container 240. That is the length of the protrusion 243 in relation to the length of the slot 248 is such that one can partially rotate the rate selector 245 with respect to container 240 to bring more or less of the set of openings in container 240 into alignment with each other. Figure 33 shows that the set of openings s 244d, 244c and 244b have been rotationally positioned inline with slot 46 to permit fluid access to the dispersant material 258 in chamber 260 of dispersant container 240.

In the present invention the dispenser container 240 and in rate selector 245 have top portions that coact with each other to provide an annular recessed band 261. That is, member 241 has a first annular lip 262 on the lower side and selector 245 has a top annular lip 263. The annular recess formed between lip 262 on and lip 263 provides a space for positioning the stops 222, 223, 224 and 225, which are shown in Figure 28, therein. That is, the height of stops 223, 224, 225 and 226 is such that the stops fit into the recess formed on band 261 so that the top edges of the stops engage the top lip 262 and the bottom edge of the stops engage the lower lip 263 to thereby hold the dispenser cartridge 212 in holder 211.

The stops 223, 224 and 225, which are mounted on a resilient cantilevered member are integrally formed from the material of holder 211 to provide for quick engagement and disengagement with the lips 262 and 263 thereby providing a latch to secure the holder 211 to the cartridge dispensers. This allows one to snap the dispenser cartridge 212 into holder 211 by merely forcing the cartridge 212 axially upward in the recess in the holder until the resilient members 226, 227 and 228 flex radially outward to allow stops 223, 224 and 225 and stop 222 on the opposite side to slip therepast until the stops can engage the lip 262, Once the stops are in the recesses of the band 261 the resilient members 226. 227 and 228 bend inward to bring the stops 223, 224 and 225 into position so that lips 262 and 263 prevent axial displacement. The use of resilient members 226, 227 and 228, which bend inward in response to an external force allows one to axially force the dispenser cartridge 212 into engagement with holder 211 through hand pressure alone or remove dispersant cartridge 212 from engagement with holder 211 by hand pressure alone by axially pulling on dispersant cartridge 212 with respect to holder 210. On the other hand, since an external force is required to remove the dispersant cartridge 212 from the holder 210, the dispersant cartridge 212 remains in holder 210 until such time as a user wishes to remove and replace the dispenser cartridge 212. This ensures that the holder 211 can maintain the cartridge 212 in position on the holder while the dispersant therein is made available to the surrounding fluid.

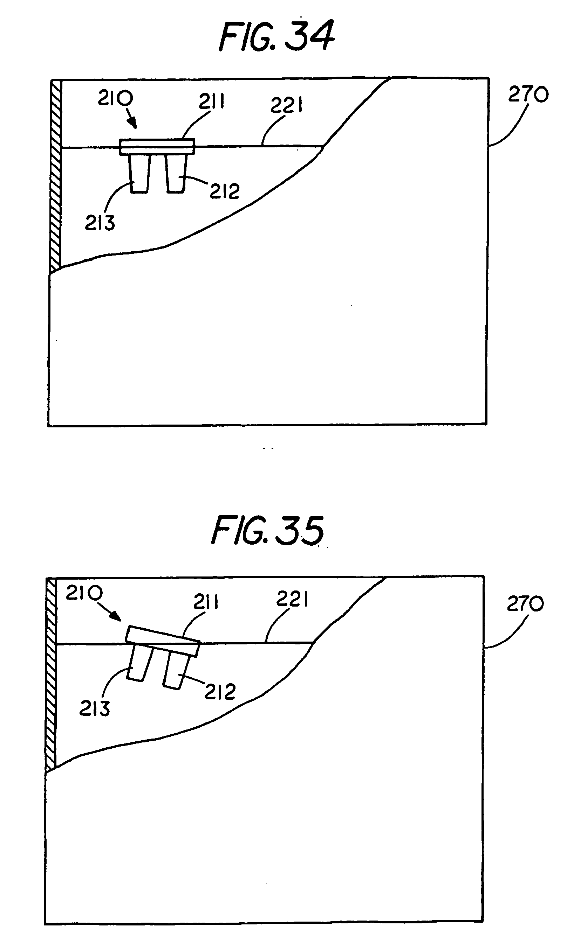

Figure 34 shows a partial cross section view of a spa or hot tub 270 having the floating dispenser system 210 floating in a condition with a portion of the floating dispenser located above the water surface or water line 221 and a further portion below the water line. The dispenser cartridges 212 and 213, which are secured to the bottom side of holder 211, are located below the water line 221 in condition to provide a fluid port to enable ingress and egress of the dispersant from the cartridge dispensers.

Figure 35 shows the condition of the floating dispenser 210 when one of the cartridges contains a dissoluble material and the other contains a non-dissoluble material. For example, container 212 can contain the minerals which are used to purify the water. Typically, the minerals remain as the ions from the minerals are released into the water to kill the bacteria. The other dispenser 213 can contain a stick of bromine. When the floating dispenser 210 with full dispersant cartridges is placed in the tub the dispenser system 210 floats in a first orientation as shown in Figure 34. Once the bromine dissolve the floating dispenser 210 becomes empty and reorients to a second ordination as shown in Figure 35. That is, the minerals remain at substantially the same weight since only the ions are being removed from the minerals white the entire bromine stick is being dissolved into the water. The result is that the dispersant container 213, which held the bromine, becomes fighter causing the floating dispenser 210 to list and float at a second orientation and thus alerts a user to the fact that the dissoluble dispersant has been spent and needs to be replenished.

While the floating dispenser system 210 has been shown with two dispenser cartridges it is envisioned that in certain instance additional cartridge dispensers can be used in the floating dispensing system, for example one may want to introduce another dispensing material or one may wish to merely have additional dispensing material available.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A floating dispensing system (210) comprising:
a cartridge holder (211), said cartridge holder (211) having a top side (211a) and a bottom side (211b), said top side (211 a) normally located above a water line (221) and said bottom side (211b) normally located below the water line (221); a first buoyant cartridge (212), containing a first water treatment material, said first buoyant cartridge (212) being secured to and protruding from the bottom side (211b) of said cartridge holder (212) to enable dispensing of said first water treatment material therefrom;
a second buoyant cartridge (213), said second cartridge (213) containing a second water treatment material, said second buoyant cartridge (213) being secured to and protruding from the bottom side (211b) of said cartridge holder (211) to enable dispensing of said second water treatment material therefrom to enable either or both of said cartridges to dispense said first and or second water treatment material therefrom as the cartridge holder (211) floats in a body of water, the first buoyant cartridge (212) and the second buoyant cartridge (213) being located in a side by side condition, so that one can determine whether the cartridge with the most dissoluble dispersant is spent by observing the floating orientation with respect to the water line of the floating dispersing system.

2. The floating dispensing system of claim 1 wherein:
the bottom side (211b) includes a first recess (220) with a latch therein for securing one of said cartridges (212, 213) therein;
the first cartridge (212) and the second cartridge (213) have a cylindrical top and said cartridge holder (211) holds said first cartridge (212) and said second cartridge (213) in a side by side condition;
the first cartridge (212) contains minerals;
the second cartridge (213) contains bromine;
the first cartridge (212) includes a dispersant rate selector (245) for controlling a size of a water access path to an interior of the first cartridge (212);
the second cartridge (213) includes a dispersant rate selector (245) for controlling a size of a water access pass to an interior of the second cartridge (213);
each of said cartridges (212, 213) contain a float (250) to provide buoyancy to each of the cartridges (212, 213)
each of the cartridges (212, 213) are sealed to prevent access to the water treatment material therein;
each of the cartridges (212, 213) have a central axis and each of the cartridges (212, 213) floats with the central axis thereof in a vertical orientation when the material therein is in an unspent condition; and
the cartridge holder (211) and the cartridges (212, 213) are comprised of a polymer plastic.

3. The floating dispensing system of claim 1 wherein the first cartridge (212) contains a dissoluble dispersant and the second cartridge (213) contains a non dissoluble dispersant with said floating dispensing system floating in a first orientation when the dispersant are in an unspent condition and in a second orientation when the dissolvable dispersant is in a spent condition so that one can determine whether the cartridge with the dissoluble dispersant is spent by observing the floating orientation with respect to the water line of the floating dispensing system.

4. The floating dispensing system of claim 1 wherein the first cartridge (212) and said second cartridges (213) are releasably secured to said cartridge holder (211) to permit replacement of either or both of said cartridges (212, 213).

5. The floating dispensing system of claim 3 wherein the first cartridge (212) contains an ion releasing material and the second cartridge (213) contains bromine.

6. A holder for a floating dispensing system as defined in claim 1 wherein the holder (211) includes a first cartridge receiving recess (220) and a second cartridge receiving recess (220a);
said holder (211) comprises a first and a second cartridge securing members, the first cartridge securing member comprises a member for releasably securing a first dispensing member (212) therein;
the holder (211) is buoyant with respect to the liquid to receive a dispersant;
the first cartridge receiving recess (220) and the second cartridge receiving recess (220a) arc located in a side by side condition therein, so that one can determine whether the cartridge with the most dissoluble dispersant is spent by observing the floating orientation with respect to the water line of the floating dispersing system;
the holder (211) contains a chamber therein with a set of ports (211c) for ingress and egress of fluid therethrough;
the holder (211) has a top side (211a) and a bottom side (211b) with the first cartridge securing member and the second cartridge securing member being located in the bottom side (211b) of the holder and a set of ports (211c) for ingress and egress of fluid are located on the bottom side (211b) of the holder (211); and
the first cartridge securing member comprises a cantilever member (226) with a cartridge engaging protrusion (258) thereon.

7. Method of treating water in a spa, pool or hot tub with a floating dispensing system as defined in claim 1 comprising:
attaching a first cartridge dispenser (212), having a first water treatment material therein to a holder (211);
attaching a second cartridge dispenser (213) having a second water treatment material therein to the holder (211);
placing the holder (211) in a body of water in a spa, pool or hot tub wherein the holder (211) and the cartridge dispensers (213, 213) contain sufficient buoyancy so that the holder (211) floats at least partially above a water line (221) and each of the cartridge dispenses (212, 213) extend below the water line (221).

8. The method of claim 7 including the steps of:
adjusting a size of an opening into said first cartridge (212) dispenser to control the amount of water treatment material dispensed therefrom;
adjusting a size of an opening into said second cartridge (213) dispenser to control the amount of water treatment material dispensed therefrom;
forming the first cartridge (212) and the second cartridge (213) each with a buoyant top chamber to assist in buoyantly supporting the first cartridge (212) and the second cartridge (213);
placing a water treatment material comprises placing a halogen in one of said cartridges (212, 213) and placing a mineral in the other of said cartridges (212, 213);
removing a spent first cartridge (212) dispenser and replacing said spent first cartridge (212) dispenser with a fresh cartridge dispenser while retaining the second cartridge (213) dispenser in said buoyant head; and
sealing each of the cartridges (212, 213) by a mechanical inter lock to prevent a direct access to the waster treatment material contained therein.

## Patentansprüche

1. Ein schwimmendes Abgabesystem (210), das Folgendes umfasst:
einen Patronenhalter (211), wobei der Patronenhalter (211) eine Oberseite (211a) und eine Unterseite (211b) hat, wobei sich die Oberseite (211a) normalerweise oberhalb eines Wasserspiegels (221) befindet und sich die Unterseite (211b) normalerweise unterhalb des Wasserspiegels (221) befindet; eine erste schwimmfähige Patrone (212), die ein erstes Wasserbehandlungsmaterial enthält, wobei die erste schwimmfähige Patrone (212) an der Unterseite (211b) des Patronenhalters (212) gesichert ist und daraus herausragt, um die Abgabe des ersten Wasserbehandlungsmaterials daraus zu ermöglichen,
eine zweite schwimmfähige Patrone (213), wobei die zweite Patrone (213) ein zweites Wesserbehandlungsmaterial enthält, wobei die zweite schwimmfähige Patrone (213) an der Unterseite (211b) des Patronenhalters (211) gesichert ist und daraus herausragt, um die Abgabe des zweiten Wasserbehandlungsmaterials daraus zu ermöglichen, um es einer oder beiden der Patronen zu ermöglichen, das erste und/oder das zweite Wasserbehandlungsmaterial daraus abzugeben, wenn der Patronenhalter (211) in einem Wasserkörper schwimmt, wobei sich die erste schwimmfähige Patrone (212) und die zweite schwimmfähige Patrone (213) nebeneinander befinden, so dass man bestimmen kann, ob die Patrone mit dem löslichsten Dispergiermittel verbraucht ist, durch Beobachtung der schwimmenden Ausrichtung zum Wasserspiegel des schwimmenden Abgabesystems.

2. Das schwimmende Abgabesystem gemäß Anspruch 1, worin:
die Unterseite (211b) eine erste Aussparung (220) mit einer Verriegelung darin zur Sicherung einer der Patronen (212, 213) darin einschließt,
die erste Patrone (212) und die zweite Patrone (213) eine zylindrische Oberseite haben und der Patronenhalter (211) die erste Patrone (212) und die zweite Patrone (213) nebeneinander angeordnet hält,
die erste Patrone (212) Mineralien enthält,
die zweite Patrone (213) Brom enthält,
die erste Patrone (212) einen Dispergiermittelraten-Selektor (245) zur Steuerung einer Größe eines Wasser-Zutrittspfads zu einem Inneren der ersten Patrone (212) einschließt,
die zweite Patrone (213) einen Dispergiermittelraten-Selektor (245) zur Steuerung einer Größe eines Wasser-Zutrittspfads zu einem Inneren der zweiten Patrone (213) einschließt,
jede der Patronen (212, 213) einen Schwimmer (250) enthält, um jeder der Patronen (212, 213) Schwimmfähigkeit zu verleihen,
jede der Patronen (212, 213) versiegelt wird, um Zugriff auf das Wasserbehandlungsmaterial darin zu verhindern,
jede der Patronen (212, 213) eine Mittelachse hat und jede der Patronen (212, 213) mit der Mittelachse davon in einer vertikalen Ausrichtung schwimmt, wenn das Material darin sich in einem unverbrauchten Zustand befindet, und
der Patronenhalter (211) und die Patronen (212, 213) aus einem Polymerkunststoff bestehen.

3. Das schwimmende Abgabesystem gemäß Anspruch 1, worin die erste Patrone (212) ein lösliches Dispergiermittel enthält und die zweite Patrone (213) ein nicht lösliches Dispergiermittel enthält, wobei das schwimmende Abgabesystem in einer ersten Ausrichtung schwimmt, wenn das Dispergiermittel sich in einem nicht verbrauchten Zustand befindet, und in einer zweiten Ausrichtung, wenn das lösliche Dispergiermittel in einem verbrauchten Zustand ist, so dass man durch Beobachtung der schwimmenden Ausrichtung im Verhältnis zum Wasserspiegel des schwimmenden Abgabesystems ermitteln kann, ob die Patrone mit dem löslichen Dispergiermittel verbraucht ist.

4. Das schwimmende Abgabesystem gemäß Anspruch 31, wobei, die erste Patrone (212) und die zweite Patrone (213) lösbar an dem Patronenhalter (211) gesichert sind, um das Ersetzen einer oder beider der Patronen (212, 213) zu ermöglichen.

5. Das schwimmende Abgabesystem gemäß Anspruch 3, worin die erste Patrone (212) ein Ionen freisetzendes Material enthält und die zweite Patrone (213) Brom enthält.

6. Ein Halter für ein schwimmendes Abgabesystem gemäß Anspruch 1, worin der Halter (211) eine erste eine Patrone aufnehmende Aussparung (220) und eine zweite eine Patrone aufnehmende Aussparung (220a) einschließt,
der Halter (211) ein erstes und ein zweites Patronen-Sicherungsglied umfasst, wobei das erste Patronen-Sicherungsglied ein Glied zur lösbaren Sicherung eines ersten Abgabeglieds (212) darin umfasst,
der Halter (211) in Bezug auf die Flüssigkeit schwimmfähig ist, um ein Dispergiermittel aufzunehmen,
die erste die Patrone aufnehmende Aussparung (220) und die zweite die Patrone aufnehmende Aussparung (220a) sich befinden nebeneinander darin, so dass man durch Beobachtung der Schwimm-Ausrichtung im Verhältnis zum Wasserspiegel des schwimmenden Abgabesystems ermitteln kann, ob die Patrone mit dem löslichsten Dispergiermittel verbraucht ist,
der Halter (211) eine Kammer darin mit einem Satz von Öffnungen (211c) für den Eintritt und Austritt von Flüssigkeit **dadurch** enthält,
der Halter (211) eine Oberseite (211a) und eine Unterseite (211b) hat, wobei sich das erste Patronen-Sicherungsglied und das zweite Patronen-Sicherungsglied in der Unterseite (211b) des Halters befinden und ein Satz von Öffnungen (211c) für den Eintritt und Austritt von Flüssigkeit sich auf der Unterseite (211b) des Halters (211) befinden, und
das erste Patronen-Sicherungsglied ein Auslegerglied (226) mit einem in die Patrone eingreifenden Vorsprung (258) daran umfasst.

7. Verfahren zur Behandlung von Wasser in einem Bad, Pool oder Whirlpool mit einem schwimmenden Abgabesystem wie in Anspruch 1 definiert, Folgendes umfassend:
Anbringung eines ersten Patronen-Spenders (212), der ein erstes Wasserbehandlungsmaterial darin hat, an einem Halter (211),
Anbringung eines zweiten Patronen-Spenders (213), der ein zweites Wasserbehandlungsmaterial darin hat, am Halter (211),
Platzierung des Halters (211) in einem Wasserkörper in einem Bad, Pool oder Whirlpool, wobei der Halter (211) und die Patronen-Spender (213, 213) ausreichend Schwimmfähigkeit haben, damit der Halter (211) zumindest teilweise oberhalb eines Wasserspiegels (221) schwimmt und jeder der Patronen-Spender (212, 213) sich unterhalb des Wasserspiegels (221) erstreckt.

8. Das Verfahren gemäß Anspruch 7, das folgende Schritte einschließt:
Einstellung einer Größe einer Öffnung in den ersten Patronen-(212)-Spender zur Steuerung der Menge von Wasserbehandlungsmaterial, das davon abgegeben wird,
Einstellung einer Größe einer Öffnung in den zweiten Patronen-(212)-Spender zur Steuerung der Menge von Wasserbehandlungsmaterial, das davon abgegeben wird,
Formen der ersten Patrone (212) und der zweiten Patrone (213) jeweils mit einer schwimmfähigen oberen Kammer, um das schwimmende Tragen der ersten Patrone (212) und der zweiten Patrone (213) zu unterstützen,
die Platzierung eines Wasserbehandlungsmaterials umfasst die Platzierung eines Halogens in eine der Patronen (212, 213) und die Platzierung eines Minerals in die andere der Patronen (212, 213),
Entfernen eines verbrauchten ersten Patronen-(212)-Spenders und Ersetzen des verbrauchten ersten Patronen-(212)-Spenders durch einen neuen Patronen-Spender bei gleichzeitigem Halten des zweiten Patronen-(213)-Spenders in dem schwimmfähigen Kopf, und
Versiegelung jeder der Patronen (212, 213) durch eine mechanische Verriegelung, um einen direkten Zugriff auf das darin enthaltene Wasserbehandlungsmaterial zu verhindern.

## Revendications

1. Système de distribution flottant (210) comprenant :
un support de cartouche (211), ledit support de cartouche (211) ayant un côté supérieur (211a) et un côté inférieur (211b), ledit côté supérieur (211a) étant normalement situé au-dessus d'une ligne d'eau (221) et ledit côté inférieur (211b) étant normalement situé au-dessous de la ligne d'eau (221) ; une première cartouche flottante (212), contenant un premier matériau de traitement de l'eau, ladite première cartouche flottante (212) étant fixée au côté inférieur (211b) dudit support de cartouche (212) dont elle fait saillie pour assurer la distribution dudit premier matériau de traitement de l'eau de ladite première cartouche ;
une seconde cartouche flottante (213), ladite seconde cartouche (213) contenant un second matériau de traitement de l'eau, ladite seconde cartouche flottante (213) étant fixée au côté inférieur (211b) dudit support de cartouche (211) dont elle fait saillie pour assurer la distribution dudit second matériau de traitement de l'eau de ladite seconde cartouche afin de permettre à l'une ou aux deux cartouches de distribuer ledit premier et/ou ledit second matériau de traitement de l'eau desdites cartouches lorsque le support de cartouche (211) flotte dans une masse d'eau, la première cartouche flottante (212) et la seconde cartouche flottante (213) étant disposées côte à côte, de sorte que l'on puisse déterminer si la cartouche ayant le dispersant le plus dissoluble est épuisée en observant l'orientation de la flottaison par rapport à la ligne d'eau du système de distribution flottant.

2. Système de distribution flottant selon la revendication 1, dans lequel :
le côté inférieur (211b) comprend un premier évidement (220) contenant un verrou pour y fixer l'une desdites cartouches (212, 213) ;
la première cartouche (212) et la seconde cartouche (213) ont une partie supérieure cylindrique et ledit support de cartouche (211) supporte ladite première cartouche (212) et ladite seconde cartouche (213) côte à côte ;
la première cartouche (212) contient des minéraux ;
la seconde cartouche (213) contient du brome ;
la première cartouche (212) comprend un sélecteur de taux de dispersant (245) pour commander le calibre d'un trajet d'accès de l'eau à l'intérieur de 1a première cartouche (212) ;
la seconde cartouche (213) comprend un sélecteur de taux de dispersant (245) pour commander le calibre d'un passage d'accès d'eau à l'intérieur de la seconde cartouche (213) ;
chacune desdites cartouches (212, 213) contient un flotteur (250) pour assurer une flottabilité à chacune des cartouches (212, 213) ;
chacune des cartouches (212, 213) est scellée pour y empêcher l'accès au matériau de traitement de l'eau;
chacune des cartouches (212, 213) a un axe central et chacune des cartouches (212, 213) flotte avec son axe central dans une orientation verticale lorsque le matériau est dans un état non épuisé ; et
le support de cartouche (211) et les cartouches (212, 213) sont constitués d'un plastique polymère.

3. Système de distribution flottant selon la revendication 1, dans lequel la première cartouche (212) contient un dispersant dissoluble et la seconde cartouche (213) contient un dispersant non dissoluble avec ledit système de distribution flottant dans une première orientation lorsque le dispersant est dans un état non épuisé et dans une seconde orientation lorsque le dispersant dissoluble est dans un état épuisé de sorte que l'on puisse déterminer si la cartouche avec le dispersant dissoluble est épuisée en observant l'orientation de la flottaison par rapport à la ligne d'eau du système de distribution flottant.

4. système de distribution flottant selon la revendication 1, dans lequel la première cartouche (212) et ladite seconde cartouche (213) sont fixées de manière amovible audit support de cartouche (211) afin de permettre le remplacement de l'une ou des deux cartouches (212, 213).

5. Système de distribution flottant selon la revendication 3, dans lequel la première cartouche (212) contient un matériau libérant des ions et la seconde cartouche (213) contient du brome.

6. Support pour système de distribution flottant selon la revendication 1, dans lequel le support (211) comprend un premier évidement récepteur de cartouche (220) et un second évidement récepteur de cartouche (220a) ;
ledit support (211) comprend un premier et un second éléments de fixation de cartouche, le premier élément de fixation de cartouche comprend un élément pour y fixer de manière amovible un premier élément de distribution (212) ;
le support (211) flotte par rapport au liquide pour recevoir un dispersant ;
le premier évidement récepteur de cartouche (220) et le second évidement récepteur de cartouche (220a) y sont disposés côte à côte, de sorte que l'on puisse déterminer si la cartouche avec le dispersant le plus dissoluble est épuisée en observant l'orientation de la flottaison par rapport à la ligne d'eau du système de dispersion flottant :
le support (211) contient une chambre avec un ensemble d'orifices (211c) pour y faire entrer et sortir du fluide ;
le support (211) a un côté supérieur (211a) et un côté inférieur (211b), le premier élément de fixation de cartouche et le second élément de fixation de cartouche étant situés dans le côté inférieur (211b) du support et un ensemble d'orifices (211c) pour faire entrer et sortir du fluide est ménagé sur le côté inférieur (211b) du support (211) ; et
le premier élément de fixation de cartouche comprend un élément cantilever (226) portant une saillie (258) s'engageant sur la cartouche.

7. Procédé de traitement de l'eau dans un spa, une piscine ou un jacuzzi avec un système de distribution flottant selon la revendication 1, comprenant les étapes consistant à :
fixer un premier distributeur à cartouche (212), ayant un premier matériau de traitement de l'eau sur un support (211) ;
fixer un second distributeur de cartouche (213) ayant un second matériau de traitement de l'eau sur le support (211) ;
placer le support (211) dans une masse d'eau dans un spa, une piscine ou un jacuzzi, le support (211) et les distributeurs à cartouche (213, 213) ayant une flottaison suffisante pour que le support (211) flotte au moins en partie au-dessus d'une ligne d'eau (221) et chacun des distributeurs à cartouche (212, 213) s'étendant au-dessous de la ligne d'eau (221).

8. Procédé selon la revendication 7, comprenant les étapes consistant à :
ajuster le calibre d'une ouverture dans ledit premier distributeur à cartouche (212) afin de commander la quantité de matériau de traitement de l'eau distribuée par celui-ci ;
ajuster le calibre d'une ouverture dans ledit second distributeur à cartouche (213) pour commander la quantité de matériau de traitement de l'eau distribuée par celui-ci ;
former la première cartouche (212) et la seconde cartouche (213) chacune avec une chambre supérieure flottante pour aider à supporter en flottaison la première cartouche (212) et la seconde cartouche (213) ;
placer un matériau de traitement de l'eau comprenant le placement d'un halogène dans l'une desdites cartouches (212, 213) et le placement d'un minéral dans l'autre desdites cartouches (212, 213) ;
retirer un premier distributeur à cartouche épuisé (212) et remplacer ledit premier distributeur à cartouche épuisé (212) par un distributeur à cartouche neuf tout en retenant le second distributeur à cartouche (213) dans ladite tête flottante ; et
sceller chacune des cartouches (212, 213) par un verrouillage mutuel mécanique afin d'empêcher un accès direct au matériau de traitement de l'eau qui y est contenu.
